# EUROPÄISCHE PATENTSCHRIFT

(11) **EP 3 541 624 B1**
(45) Veröffentlichungstag und Bekanntmachung des Hinweises auf die Patenterteilung: **09.09.2020**
(21) Anmeldenummer: 17798212.1
(22) Anmeldetag: 16.11.2017
(51) Int. Cl.: B32B 15/08, B32B 15/20, B32B 27/06, B32B 27/36

(54) **OPAKER MEHRSCHICHTKÖRPER AUS POLYCARBONAT ZUM WÄRMEMANAGEMENT**
OPAQUE MULTI-LAYER POLYCARBONATE BODY FOR THERMAL MANAGEMENT
CORPS STRATIFIÉ OPAQUE EN POLYCARBONATE DESTINÉ À LA GESTION THERMIQUE

(30) Priorität: 17.11.2016 EP 16199350
(43) Veröffentlichungstag der Anmeldung: 25.09.2019
(73) Patentinhaber: Covestro Deutschland AG, 51373 Leverkusen (DE)
(72) Erfinder: MEYER, Alexander, 40489 Düsseldorf (DE); OSER, Rafael, 47800 Krefeld (DE); HINZMANN, Dirk, 50259 Pulheim (DE); KUHLMANN, Timo, 42799 Leichlingen (DE)
(74) Vertreter: Levpat
(86) Internationale Anmeldenummer: PCT/EP2017/079374
(87) Internationale Veröffentlichungsnummer: WO 2018/091558

(56) Entgegenhaltungen:
- EP-A1- 1 342 650
- EP-A1- 2 974 848
- DE-A1-102016 100 567

## Beschreibung

Die Erfindung betrifft ein opakes Karosserieteil, insbesondere ein Dachmodul oder einen Teil eines Dachmoduls, mit einer Substratschicht auf Basis von Polycarbonat, welches zur Abschirmung eines Fahrzeuginnenraumes vor Sonnenstrahlung geeignet ist.

Auf thermoplastischem Material basierende Bauteile bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Da thermoplastische Materialien i.d.R. durchlässig für IR-Strahlung sind, ist es erforderlich, diese mit einem Wärmeschutz auszurüsten. Beispielsweise soll sich ein Fahrzeuginnenraum, etwa ein Kfz-Innenraum, nicht störend aufheizen, sofern thermoplastisches Material für ein Dachmodul verwendet wird.

Thermoplastische Materialien können bezüglich der Wärmeschutzwirkung unterschiedlich ausgerüstet sein.

Zwecks Wärmemanagement können thermoplastische Materialien mit IR-reflektierenden Additiven ausgestattet werden, um sowohl die Aufheizung des Formteils als auch die Transmission von Wärmestrahlung in den Innenraum zu reduzieren. Derartige Systeme werden z.B. in DE 102004058083 A1, WO 2011/144429 A1 oder DE 102007061052 A1 beschrieben. Die dort beschriebenen Additive lassen sich jedoch nicht oder zumindest nicht ohne Weiteres in jedes thermoplastische Material, beispielsweise etwa in Polycarbonat, einarbeiten.

DE 102016100567 A1 betrifft eine Batteriepaketabdeckung für ein E-Fahrzeug, die Wärme z.B. vom Abgasrohr von den empfindlichen Batteriezellen fernhalten soll. Die Batteriepaketabdeckung umfasst eine Abdeckung und eine Wanne. Die Abdeckung umfasst eine erste Schicht und ggf. eine zweite Schicht. Die erste Schicht ist bei einer Ausführungsform eine Metallschicht, die zweite ein Polymermaterial. Die Metallschicht ist z.B. eine Aluminiumfolie oder eine dicker Schicht von 3 bis 4 mm. Sowohl die Metallschicht als auch die Polymerschicht werden als mögliche äussere Schicht genannt.

Es können z.B. thermoplastische Materialien durch Pigmente wie Ruß opak eingestellt sein und damit über einen weiten Wellenlängenbereich die entsprechende elektromagnetische Strahlung absorbieren, die Materialien lassen die Strahlung also nicht durch die Schicht hindurch. Allerdings heizen sich derartige Materialien dadurch stark auf, so dass diese selbst wiederum Wärme durch Konvektion, Strahlung oder Wärmeleitung abgeben können. Diese Materialien können hohe Oberflächentemperaturen erreichen.

Für Polycarbonat geeignete IR-reflektierende Pigmente und entsprechende Formmassen auf Basis von Polycarbonat werden auch in WO 2015/044911 A1 beschrieben. Allerdings weisen derartige Systeme häufig eine ungenügende Witterungsstabilität auf. Durch die Wechselwirkung mit Licht induzieren die IR-reflektierenden Pigmente in der Polycarbonatmatrix oder im Falle von lackierten Systemen in der darüber liegenden Deckschicht Prozesse, die zum Verlust der Farbintensität bzw. zur Farbveränderung und im Fall der lackierten Systeme zu Defekten in der Lackschicht führen.

IR-reflektierende Additive in ein Polycarbonatsubstrat zu integrieren, wie es die WO 2015/044911 A1 beschreibt, ist üblicherweise mit einer geringeren Witterungsbeständigkeit und aufgrund der IR-reflektierenden Pigmente mit einer verschlechterten optischen Brillanz verbunden.

Die Integration IR-absorbierender Additive trägt zum Aufheizen des Polycarbonatsubstrats bei, was mit einer Aufheizung des jeweiligen Innenraums über Konvektion, Wärmeleitung und ggf. Wärmestrahlung verbunden ist.

Es ist ferner bekannt, dass durch den Einsatz von Metallschichten auf transparenten Substraten wie Glas oder amorphem Thermoplast, zur Strahlungsquelle hin gerichtet, IR-reflektierende Eigenschaften erhalten werden können. Diese Systeme sind vor allem für Glas beschrieben, können aber prinzipiell auf thermoplastische Systeme, insbesondere auch auf aromatisches Polycarbonat, übertragen werden. Derartige Aufbauten, enthaltend IR-reflektierende Metallschichten, sind beispielsweise in US 2015/0185382 A1 beschrieben. Ferner sind IR-reflektierende Metallschichten, welche auf transparente polymere Substrate aufgebracht werden, in DE 102009013960 A1 beschrieben. Derartige Foliensysteme werden üblicherweise auf Substrate wie Glas aufgebracht. Um eine möglichst hohe Witterungsstabilität zu erhalten, werden diese Folien im Kfz- bzw. Mobilitätsbereich zwischen zwei Verbundglasscheiben - häufig in Kombination mit einem weiteren Kunststoff laminiert - angeordnet. Die Metallsysteme werden häufig auf einem flexiblen Polymer vom Typ PMMA, Polyester, Polyimid, Polyethylen, Polypropylen, Polyamid, vorzugsweise Polyethylenterephthalat (PET), aufgebracht. In letzterem Fall kann der Aufbau aus dünnen Schichten auf das flexible Substrat aus PET aufgebracht werden und anschließend eine Verglasung gebildet werden, indem das flexible Polymer mit einem oder mehreren Substraten aus Glas, insbesondere über Zwischenfolien aus Polyvinylbutyral, PVB, verbunden wird. Dieser Typ eines flexiblen Substrats wird im Allgemeinen mit einer Dicke von 5 bis 50 µm hergestellt. Solche Systeme sind z.B. in EP 0 464 701 A2 beschrieben. Alternativ kann die Metallschicht oder der spezielle Metallschichtaufbau auch direkt auf eine Glasschicht gesputtert werden und dann mit einer zweiten Scheibe, ggf. unter Einschluss weiterer Folien wie PVB, schlüssig verbunden werden. Auch hier ist somit eine hohe Witterungsstabilität gegeben. Im Architekturbereich wird häufig mit Zwei- oder Dreifachverglasungen gearbeitet. Dabei befindet sich zwischen den Gläsern zur Isolationswirkung eine Gasfüllung, beispielsweise eine Edelgasfüllung. Auch hier kann auf eine der inneren Scheiben eine IR-Reflexionsschicht, d.h. ein Metallschichtaufbau, aufgebracht werden, um IR-Strahlung zu reflektieren. Derartige Aufbauten sind z.B. in US 2002/037414 A1 beschrieben.

Systeme mit Glas als Substrat sind auf thermoplastische Polymere, etwa auf Polycarbonat, nicht ohne Probleme übertragbar, da Polycarbonat eine geringere Barriere gegen Sauerstoff und Feuchtigkeit aufweist. Weiterhin weist Polycarbonat andere Eigenschaften bezüglich E-Modul und Oberflächenharte auf. Polycarbonat ist jedoch aufgrund seiner guten mechanischen Eigenschaften Materialien wie Glas überlegen. Zudem kann gegenüber anderen Materialien wie Glas eine Gewichtsersparnis erzielt werden.

Die vorliegende Erfindung betrifft opake Körper; dagegen beschreibt der oben beschriebene Stand der Technik Problemlösungen für visuell transparente Substrate wie Glas, die nicht auf opake Körper übertragbar sind.

Es wäre wünschenswert, opakes thermoplastisches Material, bevorzugt auf Basis von aromatischem Polycarbonat oder PMMA, insbesondere auf der Basis von aromatischem Polycarbonat, für Kfz-Außenteile etc. einsetzen zu können und ein gutes Wärmemanagement zu erreichen, ohne dass die Oberfläche der Bauteile ein metallisches Aussehen hat.

Kfz-Außenteile aus thermoplastischem Material, die im Kraftfahrzeug-, Schienenfahrzeug- und Luftfahrzeug- bzw. im Infrastrukturbereich eingesetzt werden, sollten zudem eine lange Lebensdauer aufweisen und während dieser nicht verspröden, d.h. sie sollten witterungsstabil sein. Auch Farbe und Oberfläche (Glanzeffekt) sollten sich möglichst nur geringfügig verändern. Ferner sollten die thermoplastischen Teile möglichst über eine ausreichende Kratzfestigkeit verfügen.

Es bestand daher die Aufgabe, ein Karosserieteil, umfassend einen Mehrschichtkörper mit einer Substratschicht, basierend auf einem thermoplastischen Material, bevorzugt auf aromatischem Polycarbonat oder Polymethylmethacrylat (PMMA), besonders bevorzugt auf aromatischem Polycarbonat, bereitzustellen, durch welches das (insbesondere Sonnen-)strahlungsbedingte Aufheizen von Fahrzeuginnenräumen spürbar reduziert wird bzw. dessen Mehrschichtkörper bevorzugt ebenso geeignet ist, ein anderes Raumvolumen vor dem strahlungsbedingten Aufheizen zu schützen, wobei der Mehrschichtkörper auch an seiner nach Außen, zur Strahlungsquelle hin, gerichteten Oberfläche nur ein geringes Aufheizen zeigen sollte und bevorzugt möglichst zusätzlich noch eine gute Witterungsbeständigkeit zeigen sollte.

Die Aufgabe wird gelöst durch ein Karosserieteil, umfassend einen Mehrschichtkörper, umfassend in dieser Reihenfolge
a) optional eine Schutzschicht a,
b) eine Substratschicht b auf Basis eines thermoplastischen Polymers, auf Basis von aromatischem Polycarbonat oder PMMA, aufweisend eine Lichttransmission im Bereich von 380 bis 780 nm von weniger als 1,0 %, bestimmt bei einer Schichtdicke von 4 mm nach DIN ISO 13468-2:2006 (D65, 10°), und eine Energietransmission T_{DS} von weniger als 40%, bestimmt nach ISO 13837:2008 bei einer Schichtdicke von 4 mm,
c) ggf. eine weitere Schicht c auf Basis eines thermoplastischen Polymers mit einer Maximaldicke von 600 µm,
d) eine Metallschicht d, enthaltend mindestens ein Element, ausgewählt aus Ag, Al, Au, Pt, Fe, Cr, Sn, In, Ti, Pd, Nb, Cu, V, Edelstahl oder deren Legierungen mit einer Dicke von 40 nm bis 500 µm und
e) optional eine Schutzschicht e,
wobei
die Metallschicht d auf der Seite des Mehrschichtkörpers angeordnet ist, die dazu bestimmt ist, zum Fahrzeuginneren hin orientiert zu sein und wobei
die auf die Schicht d folgenden Schichten, einschließlich der Schutzschicht e, in Summe eine Dicke von maximal 50 nm aufweisen.

Im Rahmen der vorliegenden Erfindung können bevorzugte Ausführungsformen, die für einzelne Merkmale genannt sind, auch miteinander kombiniert werden, sofern diese nicht widersprüchlich sind.

"Auf die Schicht d folgend" meint alle Schichten auf der Seite von Schicht d), welche der Strahlungsquelle, d.h. insbesondere der Sonne, abgewandt ist.

"Karosserieteile" formen die Außenhaut von Fahrzeugen. Dabei ist der Begriff "Fahrzeug" als Oberbegriff für alle Transportmittel von Gütern, Werkzeugen und Personen zu verstehen. Dieses umfasst Landfahrzeuge, etwa Kfz und Schienenfahrzeuge, Wasserfahrzeuge, insbesondere Schiffe, und Luftfahrzeuge, insbesondere Flugzeuge.

Die erfindungsgemäßen Karosserieteile zeichnen sich dadurch aus, dass sie den jeweiligen Innenraum, wie z.B. eine Fahrgastzelle, vor Erwärmung durch solare Einstrahlung schützen.

Der Mehrschichtkörper des erfindungsgemäßen Karosserieteils kann mit weiteren Schutz- und/oder Verbindungsschichten ausgestattet werden. Zusätzlich zu der Metallschicht d können zum Schutz vor Oxidation neben einer reinen Metallschicht weitere Metall-haltige Schichten vorhanden sein. Allerdings ist die prinzipielle Abfolge des erfinderischen Aufbaus dadurch gekennzeichnet, dass sich die Metallschicht hinter dem Substrat, bevorzugt dem PMMA- oder Polycarbonatsubstrat, insbesondere dem Polycarbonatsubstrat - also auf der der Sonne abgewandten Seite - befindet. Das thermoplastische Polymer, insbesondere basierend auf Polycarbonat, in Form der Substratschicht trägt bevorzugt eine Schutzschicht a, wobei die Schutzschicht der Wärmequelle zugewandt ist.

Bevorzugt weist der Mehrschichtkörper zwischen den Schichten b bis d keine weiteren Schichten außer Klebeschichten und/oder Schutzschichten in Form von Metalloxid-/Metallnitrid-Schichten auf.

Weiter bevorzugt weist der Mehrschichtkörper neben den Schichten a bis e keine weiteren Schichten auf, abgesehen von Schutzschichten in Form von Metalloxid-/Metallnitrid-Schichten und/oder Klebeschichten zur Verbindung der einzelnen Schichten.

Die auf die Schicht d folgenden Schichten, einschließlich der Schutzschicht e, weisen in Summe bevorzugt eine Dicke von maximal 40 nm, weiter bevorzugt maximal 35 nm, auf.

Alternativ weiter bevorzugt ist ein mittels 2K-Spritzguss aufgebrachter sogenannter Schwarzrand Teil des Mehrschichtkörpers.

Nachfolgend sind die einzelnen Schichten des Mehrschichtkörpers eines erfindungsgemäßen Karosserieteils näher beschrieben:

### Schutzschicht a

Die Schutzschicht a umfasst bevorzugt einen Kratzfest-Lack (Hard-Coat). Dieser ist bevorzugt ein Polysiloxanlack, hergestellt nach dem Sol-Gel-Prozess. Die Schutzschicht a enthält besonders bevorzugt außerdem mindestens einen UV-Absorber. Die Schutzschicht a weist bevorzugt eine hohe Abrieb- und Kratzfestbeständigkeit auf und erfüllt damit insbesondere die Funktion einer Kratzfestbeschichtung.

Kommerziell erhältliche Systeme sind z.B. AS4000, SHC5020 und AS4700 von Momentive Performance Materials. Derartige Systeme sind z.B. in US 5,041,313 A, DE 3,1213,85 A1, US 5,391,795 A und WO 2008/109072 A1 beschrieben. Die Synthese dieser Materialien erfolgt üblicherweise über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Es sind verschiedene Methoden bekannt, um eine Kratzfestbeschichtung auf Kunststoffartikeln herzustellen. Diese Systeme können beispielsweise über Tauchverfahren, Spincoating, Sprühverfahren oder eine Fließbeschichtung, bevorzugt über Tauch- oder Fließverfahren, aufgebracht werden. Die Aushärtung kann thermisch oder mittels UV-Bestrahlung erfolgen. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein.

Die Schutzschicht a kann somit ein Ein- oder Mehrschichtsystem sein und somit auch eine Kombination zweier oder mehrerer Schichten a', a" etc. Insbesondere kann die Schutzschicht a aus den Schichten Decklackschicht a' und Primer-Schicht a" bestehen, wobei die Primerschicht zwischen Decklackschicht und Substratschicht b angeordnet ist.

In einer bevorzugten Ausführungsform, die eine besonders gute Bewitterungsstabilität bewirkt, umfasst die Schutzschicht a eine

### A) Kratzfestbeschichtung (Schicht a') auf Polysiloxanbasis, enthaltend

i. mindestens einen UV-Absorber aus der Gruppe der Benzophenone, Resorcine, 2-(2-Hydroxyphenyl-)Bentriazole, Hydroxyphenyl-s-Triazine, 2-Cyanacrylate, Oxalanilide
   und/oder einen UV-Inhibitor aus der Gruppe der sterisch gehinderten Amine (HALS), insbesondere basierend auf 2,2,6,6-Tetramethylpiperidin oder dessen Derivaten;
ii. mindestens eine Kombination von einem organo-modifizierten Silan mit einem Kiesel-Sol, wobei das organo-modifizierte Silan ein Methyltrialkoxy- oder Dimethyldialkoxysilan sein kann;
und optional, in einer weiter bevorzugten Ausführungsform, zusätzlich eine auf der Substratschicht b angeordnete, als Haftvermittler zwischen der Kratzfestbeschichtung auf Polysiloxanbasis und der Substratschicht b wirkende, Primerschicht (Schicht a"), enthaltend
mindestens einen UV-Absorber aus der Gruppe der Benzophenone, der Resorcine, 2-(2-Hydroxyphenyl-)Bentriazole, Hydroxyphenyl-s-Triazine, 2-Cyanacrylate, Oxalanilide und/oder sterisch gehinderten Amine (HALS), insbesondere basierend auf 2,2,6,6-Tetramethylpiperidin sowie dessen Derivaten,
wobei die Dicke der Primerschicht 0,3 µm bis 8 µm, bevorzugt 1,1 µm bis 4,0 µm, beträgt.

Unter "Derivaten" werden erfindungsgemäß solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Sofern das thermoplastische Polymer, auf dem die Substratschicht b basiert, ein aromatisches Polycarbonat ist, wird bevorzugt ein UV-Absorber enthaltender Primer eingesetzt, um die Haftung des Kratzfestlackes auf der Substratschicht b zu verbessern. Der Primer kann weitere Stabilisatoren wie z.B. HALS-Systeme (Stabilisatoren auf Basis sterisch gehinderter Amine), Haftvermittler und/oder Fließhilfsmittel enthalten. Das jeweilige Harz, welches das Basismaterial der Primerschicht bildet, kann aus einer Vielzahl von Materialien ausgewählt werden und ist beispielsweise in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melamin-basierte, Epoxy- und Alkyd-Systeme oder Mischungen dieser Systeme eingesetzt werden. Das Harz wird üblicherweise in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 140 °C eingesetzt - häufig, nachdem ein Großteil des Lösemittels kurzzeitig bei Raumtemperatur entfernt wurde. Kommerziell erhältliche Primer-Systeme sind z.B. SHP470, SHP470-FT2050 und SHP401 der Firma Momentive Performance Materials. Derartige Beschichtungen sind z.B. in US 6,350,512 B1, US 5,869,185 A, EP 1308084 A1 und WO 2006/108520 A1 beschrieben.

Die Polysiloxanschicht enthält bevorzugt siliciumorganische Verbindungen der Formel RₙSiX₄₋ₙ, und/oder partielle Kondensate derselben,
wobei die Reste R gleich oder verschieden sind und für einen linearen oder verzweigten, gesättigten oder ein- oder mehrfach ungesättigten oder aromatischen Kohlenwasserstoffrest stehen,
die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und
n 0, 1, 2 oder 3, bevorzugt 1 oder 2, ganz besonders bevorzugt 1, ist.

R steht bevorzugt für gesättigte, verzweigte oder unverzweigte Alkylreste mit 1 bis 20 Kohlenstoffatomen und/oder für ein- oder mehrfach ungesättigte verzweigte oder unverzweigte Alkenylreste mit 2 bis 20 Kohlenstoffatomen oder aromatische Gruppen mit 6 bis 12 Kohlenstoffatomen. Weiter bevorzugt weisen die Alkyl- bzw. Alkenylreste bis zu 12, noch weiter bevorzugt bis zu 8 Kohlenstoffatome auf. Besonders bevorzugt sind alle Reste Methyl und/oder Phenyl.

Besonders bevorzugt steht X für eine Alkoxygruppe, ganz besonders bevorzugt für eine C₁- bis C₄-Alkoxygruppe, beispielsweise für eine Methoxy- oder eine Ethoxygruppe.

Die Silicium-Verbindungen RₙSiX₄₋ₙ sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

Bei Verwendung der vorgenannten Siloxansysteme sind Trockenschichtdicken von 3 µm - 20 µm bevorzugt, weiter bevorzugt 5 µm - 15 µm, besonders bevorzugt 6 µm - 12 µm. Unter "Trockenschichtdicke" wird die Schichtdicke des Lackes nach Applikation, Verdampfen des Lösemittels und anschließender thermischer oder UV-Härtung gemeint. Diese Schichtdicke gilt allgemein für bevorzugte Schutzschichten a.

Wie zuvor beschrieben, können anstelle von Primer/Kratzfestbeschichtungs-Kombinationen auch Einkomponenten-Hybrid-Systeme, entweder thermisch- oder UV-härtend, für die Mehrschichtkörper eingesetzt werden.

Diese sind z.B. in EP 0570165 A2, WO 2008/071363 A2 oder DE 2804283 A beschrieben. Kommerziell erhältlich Hybrid-Systeme sind z.B. unter den Namen PHC 587, PHC 587C als thermisch härtende oder UVHC 3000 und UVHC 5000 als UV-härtende Lacke der Firma Momentive Performance Materials erhältlich. Weiter erfindungsgemäß geeignete, kommerziell erhältliche UV-härtende Lacksysteme sind UVT 610 und UVT 820 der Firma Redspot.

In einem besonders bevorzugten Verfahren zur Herstellung der Mehrschichtkörper für die erfindungsgemäßen Karosserieteile erfolgt die Applikation der Schutzschicht e über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Weitere mögliche Applikationsverfahren sind Tauchen, Rakeln, Walzen, Sprühen oder Spincoating. Hierbei können die Bauteile, sowohl hängend als auch in einem entsprechenden Warenträger gelagert, beschichtet werden.

Bei größeren und/oder 3D-Bauteilen - d.h. Bauteilen mit dreidimensionaler Oberfläche, die also eine von einer Platte abweichende Geometrie aufweisen- wird das zu beschichtende Teil in einen geeigneten Warenträger eingehängt oder aufgesetzt.

Bei Kleinteilen kann die Beschichtung auch per Hand durchgeführt werden. Hierbei wird die zu schichtende flüssige Primer- oder Lacklösung zur Ausbildung der Schutzschicht e ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Die Schichtdicke der Schicht a und a' kann beispielsweise mittels Weißlichtinterferometrie (z.B. mittels eines Weißlichtinterferometers der Firma Eta Optic; ETA-SST) bestimmt werden, was bevorzugt ist. Ferner kann über Querschnittspräparation und mikroskopische Erfassung (über Lichtmikroskopie oder Rasterelektronenmikroskopie) der Schichten über Materialkontrast die Dicke erfasst werden.

### Substratschicht b

Die Substratschicht b der Mehrschichtkörper der erfindungsgemäßen Karosserieteile besteht aus einem opaken Material, wobei unter "opak" ein Material mit der genannten Transmission im VIS-Bereich verstanden wird. Solche Materialien zeigen visuell keine Transparenz, d.h. bilden den Hintergrund nicht ab.

Als thermoplastisches Polymer für die Substratschicht b können aromatische Polycarbonat oder PMMA verwendet werden. "Auf Basis von" bedeutet hier und an anderen Stellen im Rahmen der vorliegenden Erfindungsbeschreibung, dass die beschriebene Gesamtzusammensetzung mindestens 70 Gew.-%, bevorzugt mindestens 80 Gew.-%, weiter bevorzugt mindestens 90 Gew.-%, besonders bevorzugt mindestens 95 Gew.-% des jeweiligen Polymers enthält.

Erfindungsgemäß geeignete thermoplastische Materialien zur Herstellung des erfindungsgemäßen Mehrschichtkörpers sind bevorzugt aromatische Polycarbonate, Polyestercarbonate, Polyester, PMMA, besonders bevorzugt aromatische Polycarbonate. Bezüglich der Polyester sind Typen bevorzugt, welche unter anderem aus den Rohstoffen Cyclohexandimethanol und/oder Tetramethylcyclobutandiol aufgebaut sind. Bezüglich der Polyestercarbonate sind Typen bevorzugt, welche aus den Rohstoffen Hydrochinon und/oder Terephthalsäure und/oder Isophthalsäure aufgebaut sind. Bezüglich der aromatischen Polycarbonate sind alle bekannten aromatischen Polycarbonate geeignet. Dies schließt Homopolycarbonate und Copolycarbonate ein. Sofern im Rahmen der vorliegenden Erfindung von "Polycarbonat" an irgendeiner Stelle gesprochen wird, sind insbesondere aromatische Polycarbonate gemeint.

Erfindungsgemäß geeignete Polycarbonate haben bevorzugt mittlere Molekulargewichte M̅_{w} von 10.000 bis 50.000 g/mol, weiter bevorzugt von 14.000 bis 40.000 g/mol und besonders bevorzugt von 16.000 bis 32.000 g/mol, ermittelt durch Gelpermeationschromotographie nach DIN 55672-1:2007-08, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Da die Bauteile für den Infrastruktur- oder Transportbereich relativ groß sein können und eine komplexe Geometrie aufweisen können, sollte das thermoplastische Material eine ausreichende Fließfähigkeit aufweisen, um im Spritzgussprozess, wie z.B. speziell dem Spritzprägeverfahren, zu entsprechenden Formkörpern verarbeitet werden zu können. Die Schmelzevolumenfließrate MVR beträgt daher bevorzugt 7 bis 20 cm³/(10 min), weiter bevorzugt 9 bis 19 cm³/(10 min), bestimmt nach ISO 1133-1:2011 bei 300 °C und 1,2 kg Belastung.

Die Herstellung der Polycarbonate erfolgt vorzugsweise nach dem Phasengrenzflächenverfahren oder dem Schmelze-Umesterungsverfahren, welche vielfach in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der "Encyclopedia of Polymer Science", Vol. 10 (1969), Chemistry and Physics of Polycarbonates, Polymer Reviews, H. Schnell, Vol. 9, John Wiley and Sons, Inc. (1964) sowie in den Patentschriften DE 10 31 512 A und US 6,228,973 B1 beschrieben.

Die Polycarbonate werden bevorzugt durch Reaktionen von Bisphenolverbindungen mit Kohlensäureverbindungen, insbesondere Phosgen, oder beim Schmelzeumesterungsprozess von Diphenylcarbonat bzw. Dimethylcarbonat dargestellt.

Hierbei sind Homopolycarbonate auf Basis von Bisphenol-A und Copolycarbonate auf der Basis der Monomere Bisphenol-A und 1,1-Bis-(4-hydroxyphenyl)-3,3,5-trimethylcyclohexan, z.B. Apec® der Covestro Deutschland AG, besonders bevorzugt.

Diese und weitere Bisphenol- bzw. Diolverbindungen, die sich für die Polycarbonatsynthese einsetzen lassen, sind unter anderem beschrieben in WO 2008/037364 A1 (s.7, Z. 21 bis s. 10, Z. 5), EP 1 582 549 A1 ([0018] bis [0034]), WO 2002/026862 A1 (S. 2, Z. 20 bis S. 5, Z. 14) und WO 2005/113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden.

Geeignete Verzweiger für die Herstellung von verzweigten Polycarbonaten sind aus der Literatur bekannt und beispielsweise beschrieben in den Patentschriften US 4,185,009 B und DE 25 00 092 A1 (3,3-Bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US 5,367,044 B sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind sogenannte Fries-Strukturen, wie sie für Schmelzepolycarbonate in der EP 1 506 249 A1 beschrieben sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Neben einzelnen Polymeren als Basismaterial kann die Substratschicht b auch Polymerblends als Basismaterial enthalten. Für aromatisches Polycarbonat geeignete Blendpartner sind beispielsweise kautschukmodifizierte Vinyl(co)polymerisate und/oder weitere Elastomere.

Die Zusammensetzungen, welche die Substratschicht b formen und auf einem thermoplastischen Polymer, bevorzugt auf aromatischem Polycarbonat, basieren, enthalten bevorzugt ein oder mehrere weitere, übliche Additive. Solche sind z.B. in EP-A 0 839 623, WO-A 96/15102, EP-A 0 500 496 oder "Plastics Additives Handbook", Hans Zweifel, 5th Edition 2000, Hanser Verlag, München beschriebene übliche Additive, wie z.B. Entformer, UV-Absorber, Thermostabilisatoren, Flammschutzmittel, Antistatika, Farbmittel und/oder Fließverbesserer.

Besonders bevorzugt enthalten die Zusammensetzungen Entformungsmittel auf Basis eines Fettsäureesters, bevorzugt eines Stearinsäureesters, insbesondere bevorzugt auf Pentaerythritbasis. In einer besonderen Ausführungsform werden Pentaerythrittetrastearat (PETS) und/oder Glycerinmonostearat (GMS) eingesetzt.

Optional enthält die für die Substratschicht b eingesetzte Zusammensetzung weiterhin einen Ultraviolett-Absorber. Geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in EP 0 839 623 A1, WO 1996/15102 A2 und EP 0 500 496 A1 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

In einer Ausführungsform enthält die für die Substratschicht b eingesetzte Zusammensetzung UV-Absorber.

Folgende Ultraviolett-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin® 234, BASF AG. Ludwigshafen), 2-(2'-Hydroxy-5'-(tert.-octyl)-phenyl)-benzotriazol (Tinuvin® 329, BASF AG. Ludwigshafen), 2-(2'-Hydroxy-3'-(2-butyl)-5'-(tert.butyl)-phenyl)-benzotriazol (Tinuvin® 350, BASF AG. Ludwigshafen), Bis-(3-(2H-benztriazolyl)-2-hydroxy-5-tert.-octyl)methan, (Tinuvin® 360, BASF AG. Ludwigshafen), (2-(4,6-Diphenyl-1,3,5-triazin-2-yl)-5-(hexyloxy)-phenol (Tinuvin® 1577, BASF AG. Ludwigshafen), die Benzophenone 2,4-Dihydroxy-benzophenon (Chimasorb® 22 , BASF AG. Ludwigshafen) oder 2-Hydroxy-4-(octyloxy)-benzophenon (Chimassorb® 81, BASF AG. Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, BASF AG. Ludwigshafen) oder Tetraethyl-2,2'-(1,4-phenylen-dimethyliden)-bismalonat (Hostavin® B-Cap, Clariant AG). Es können auch Mischungen dieser Ultraviolett-Absorber eingesetzt werden.

In einer bevorzugten Ausführungsform enthält die Polymerzusammensetzung weiterhin mindestens einen weiteren Thermo- bzw. Verarbeitungsstabilisator.

Bevorzugt geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritoldiphosphit, Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyldibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) oder Tris(nonylphenyl)phosphit oder deren Mischungen eingesetzt. Ferner können Alkylphosphate z. B. Mono-, Di- und Trihexylphosphat, Triisoctylphosphat und Trinonylphosphat eingesetzt werden.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und/oder Irganox 1076® (2,6-Di-tert-butyl-4-(octadecanoxycarbonylethyl)phenol) eingesetzt.

Als Farbmittel eignen sich insbesondere Farbmittel auf Anthrachinonbasis, auf Perinonbasis, auf Phthalocyaninbasis oder von diesen Strukturen abgeleitete Farbmittel. Besonders bevorzugte Farbmittel sind in WO 2012/080395 A1 beschrieben. Weiterhin können als Farbmittel Macrolex Violet 3R (CAS 61951-89-1; Solvent Violet 36), Macrolex Grün 5B (CAS 128-80-3; Solvent Green 3; C.I. 61565), Amaplast Gelb GHS (CAS 13676-91-0; Solvent Yellow 163; C:I: 58840), Macrolex Orange 3G (CAS 6925-69-5; Solvent Orange 60; C.I. 564100), Macrolex Blau RR (CAS 32724-62-2; Solvent Blue 97; C.I. 615290); Keyplast Blau KR (CAS 116-75-6; Solvent Blue 104; C.I. 61568), Heliogen Blau-Typen (z.B. Heliogen Blau K 6911; CAS 147-14-8; Pigment Blue 15:1; C.I. 74160), Heliogen Grün Typen (wie z.B. Heliogen Grün K 8730; CAS 1328-53-6; Pigment Green 7; C.I. 74260) sowie Macrolex Grün G (CAS 28198-05-2; Solvent Green 28; C.I. 625580) verwendet werden.

Die Substratschicht b weist eine Lichttransmission T_{VIS} im Bereich von 380 bis 780 nm (VIS-Bereich des Spektrums) von weniger als 1,0 % , bevorzugt weniger als 0,5 %, besonders bevorzugt weniger als 0,1 %, bestimmt bei einer Schichtdicke von 4 mm nach DIN ISO 13468-2:2006 (D65, 10°), auf.

Substratschichten auf Basis von aromatischem Polycarbonat, die oben beschriebene Transmissionsdaten aufweisen, lassen sich durch Verwendung löslicher Farbmittel, welche der oben beschriebenen Aufzählung entnommen werden können, darstellen. Beispielsweise sind Polycarbonate als Substratmaterial geeignet, wie sie u.a. in WO 2014/095981 A1 beschrieben sind. Bevorzugt enthalten die auf aromatischem Polycarbonat basierenden Zusammensetzungen Anthrachinonfarbstoffe oder Perinonfarbstoffe bzw. eine Kombinationen von Perinon- und Anthrachinonfarbstoffen. Besonders bevorzugte Polycarbonatzusammensetzungen enthalten dabei zwei oder drei strukturell unterschiedliche Farbmittel, z.B. zwei oder drei Anthrachinon-basierte Farbmittel unterschiedlicher Struktur oder eine Kombination von Perinon- und Anthrachinonfarbstoffen.

Insbesondere bevorzugt enthält die Zusammensetzung mindestens ein grünes oder blaues Farbmittel in Kombination mit mindestens einem roten oder violetten Farbmittel. Optional können weitere Farbmittel verwendet werden - darunter insbesondere bevorzugt gelbe Farbmittel. Dies bedeutet, dass bevorzugt ein Farbmittel, ausgewählt aus den Farbmitteln der Strukturen (1), (2a-c), (3), (4), (5) oder (6), insbesondere bevorzugt (1), (2a-c), (3) oder (4), mit einem Farbmittel, ausgewählt aus den Strukturen (7) bis (13), bevorzugt ausgewählt aus den Strukturen (7), (11), oder (12), sowie optional enthaltend weitere Farbmittel, bevorzugt ausgewählt aus den Strukturen (14) bis (18), insbesondere bevorzugt ausgewählt aus den Strukturen (14) und (15), verwendet wird.

Grüne Farbmittel sind insbesondere bevorzugt Farbmittel der Strukturen (1) und (2a/2b/2c):

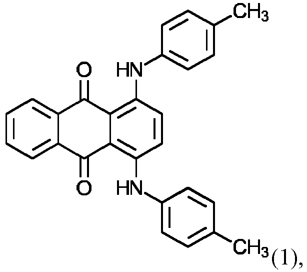

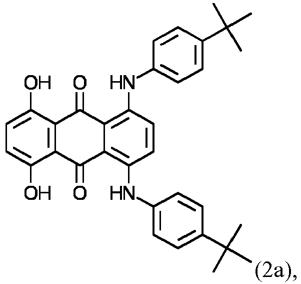

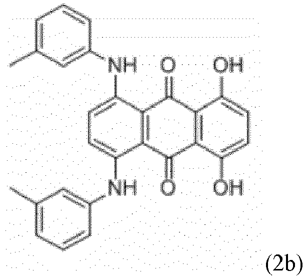

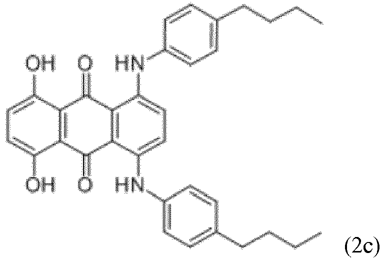

Das Farbmittel der Struktur (1) ist unter dem Namen Macrolex Grün 5B der Firma Lanxess Deutschland GmbH bekannt, Color Index-Nummer 61565, CAS-Nummer: 128-90-3, und ist ein Anthrachinonfarbstoff.

Ein bevorzugtes Farbmittel aus der Gruppe (2a/2b/2c) ist Macrolex Grün G (Solvent Green 28), (Struktur (2a)).

Blaue Farbmittel, die eingesetzt werden, sind bevorzugt Farbmittel der Strukturen (3) und/oder (4a/4b): 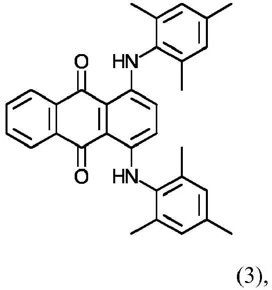 erhältlich unter dem Namen "Keyplast Blue KR", CAS-Nummer 116-75-6, Color-Index-Nummer: 61568; 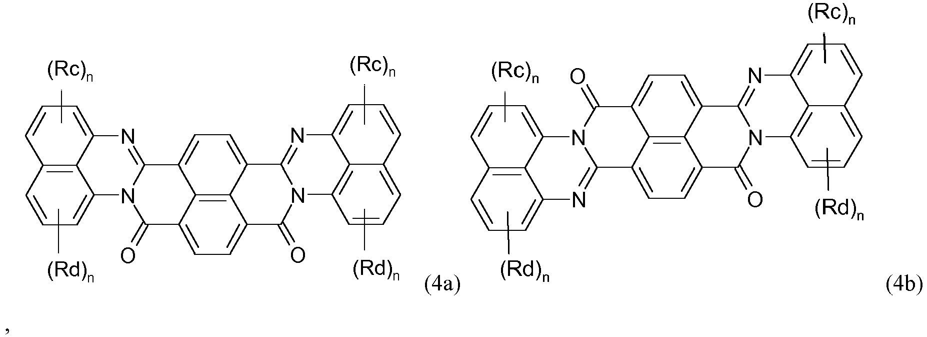 wobei
- Rc und Rd unabhängig voneinander für einen linearen oder verzweigten Alkylrest, oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht,
- n steht unabhängig vom jeweiligen R für eine natürliche Zahl zwischen 0 und 3, wobei der Rest für n=0 Wasserstoff ist.

In einer bevorzugten Ausführungsform sind Rc und/oder Rd Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Rc und Rd jeweils einen tert-butylrest dar, welcher sich bevorzugt in meta Position zu den Kohlenstoffatomen, welche die Stickstofffunktionalitäten tragen, befindet.

In einer besonders bevorzugten Ausführungsform ist in allen Ringen n=0, so dass alle Rc und Rd = H sind.

Ferner können als blaue Farbmittel eingesetzt werden:
Farbmittel der Struktur (5), erhältlich unter dem Namen "Macrolex Blue 3R Gran" 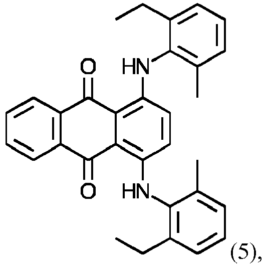 und/oder Farbmittel der Struktur (6), erhältlich unter dem Namen "Macrolex Blue RR"

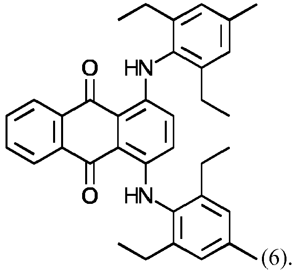

Als rotes Farbmittel wird bevorzugt ein Farbmittel der Struktur (7), erhältlich unter dem Namen "Macrolex Red 5B", mit der CAS-Nummer 81-39-0, eingesetzt:

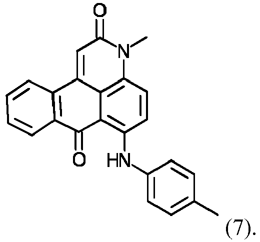

Weiterhin können Farbmittel der Strukturen (8) mit der CAS-Nummer 71902-17-5 und/oder (9) mit der CAS-Nummer 89106-94-5 eingesetzt werden:

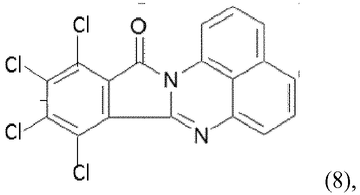

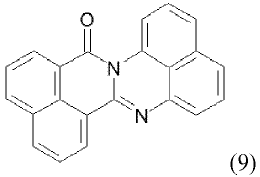

Als violette Farbmittel werden bevorzugt Farbmittel der Strukturen (10) mit der CAS-Nummer 61951-89-1, (11), erhältlich unter dem Namen "Macrolex Violet B" von der Lanxess AG, mit der CAS-Nummer 81-48-1 und/oder (12a/12b), erhältlich unter dem Namen "Amaplast Violet PK", eingesetzt: 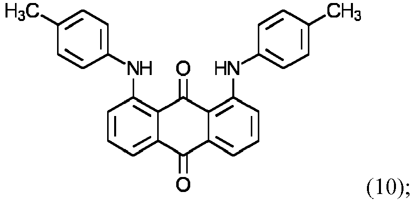 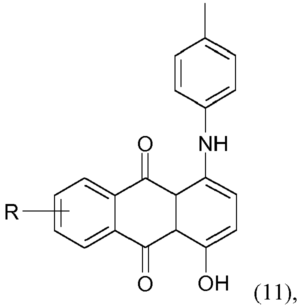 wobei R ausgewählt ist aus der Gruppe, die aus H und p-Methylphenlyamin-Rest besteht; bevorzugt ist R = H; 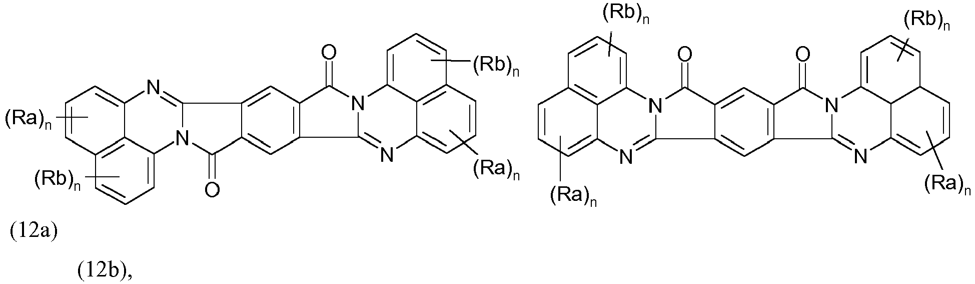 wobei
- Ra und Rb unabhängig voneinander für einen linearen oder verzweigten Alkylrest, oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht,
- n unabhängig vom jeweiligen R für eine natürliche Zahl zwischen 0 und 3 steht, wobei der Rest für n=0 Wasserstoff ist.

In einer bevorzugten Ausführungsform sind Ra und/oder Rb Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Ra und Rb jeweils einen tert-Butylrest dar, welcher sich bevorzugt in meta- Position zu den Kohlenstoffatomen, welche die Stickstofffunktionalitäten tragen, befindet.

In einer besonders bevorzugten Ausführungsform ist in allen Ringen n=0, so dass alle Ra und Rb = H sind.

Ferner können Farbmittel eingesetzt werden, die der Struktur (13), erhältlich unter dem Namen "Macrolex RedViolet R", CAS-Nummer 6408-72-6, entsprechen:

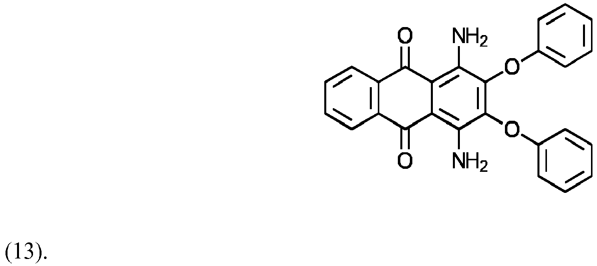

Als gelbe Farbmittel werden bevorzugt Farbmittel der Strukturen (14), erhältlich unter dem Namen "Macrolex Yellow 3G", mit der CAS-Nummer 4702-90-3 und/oder (15), insbesondere (15a), erhältlich unter dem Namen "Macrolex Orange 3G" mit der CAS-Nummer 6925-69-5, eingesetzt: 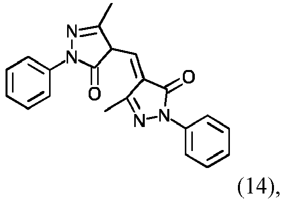 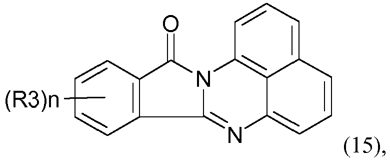 wobei R3 bevorzugt für H oder Halogen, und insbesondere bevorzugt für H oder Cl, steht, besonders bevorzugt

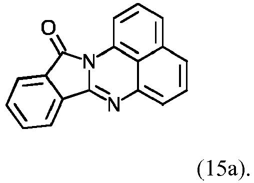

Ferner ist es möglich, Farbmittel der Strukturen (16), erhältlich unter dem Namen "Oracet Yellow 180" mit der CAS-Nummer 13676-91-0, (17) mit der CAS-Nummer 30125-47-4 und/oder (18), erhältlich unter dem Namen "Oracet Orange 220; Solvent Orange 116" mit der CAS-Nummer 669005-94-1, einzusetzen.

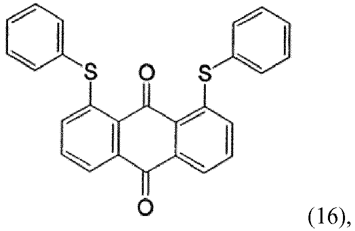

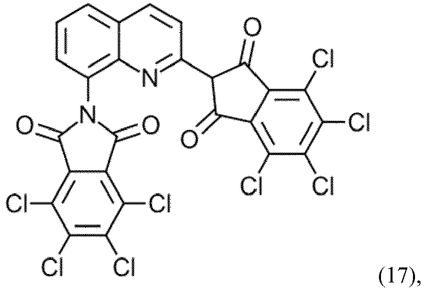

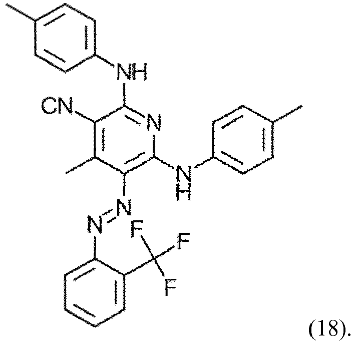

Bevorzugt sind die Farbmittel der Zusammensetzung der Substratschicht b ausschließlich aus den Farbmitteln (1) bis (18) ausgewählt.

Die Summe aller Farbmittel beträgt bevorzugt > 0,05 Gew.-%, bevorzugt > 0,08 Gew.-%, weiter bevorzugt > 0,9 Gew.-%, noch weiter bevorzugt > 0,10 Gew.-%, besonders bevorzugt > 0,11 Gew.-% und ganz besonders bevorzugt > 0,12 Gew.-%, bezogen auf die Gesamtzusammensetzung des Substratmaterials. Besonders bevorzugt ist die Zusammensetzung frei von Ruß.

Die genannte geringe Transmission ergibt sich beispielsweise für Zusammensetzungen, enthaltend die Farbmittelkombination

Macrolex Violet 3R der Firma Lanxess AG, Color-Index-Nummer 61102, ein Anthrachinonfarbstoff: 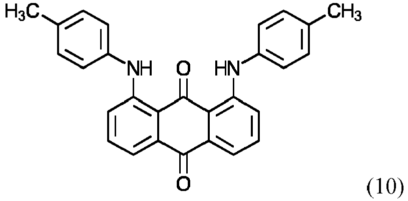 und Macrolex Grün 5B der Firma Lanxess AG, Color Index-Nummer 61565, ebenfalls ein Anthrachinonfarbstoff: 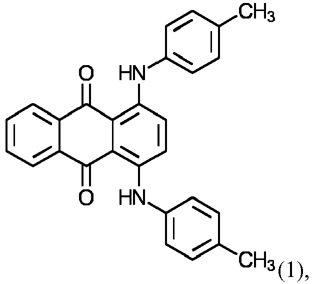 beispielsweise jeweils 0,1 Gew.-% von beiden dieser Farbmittel, bezogen auf die Gesamtzusammensetzung des Materials der Substratschicht.

Die Zusammensetzung für das Substratmaterial muss bei den für Thermoplaste üblichen Temperaturen, d.h. bei Temperaturen oberhalb von 300 °C, wie z.B. 350 °C, verarbeitbar sein, ohne dass sich bei der Verarbeitung die optischen Eigenschaften oder die mechanischen Eigenschaften deutlich verändern.

Obwohl Ruß eine signifikante Absorption im IR-Bereich aufweist, wird in dieser Anmeldung zwischen Ruß und (sonstigen) IR-Absorbern ("von Ruß verschiedene IR-Absorber") unterschieden. Eine bevorzugte Substratschicht b ist IR-transparent (d.h. die Substratschicht b weist keine nennenswerte Absorption zwischen 780 und 2500 nm auf, außer die Absorptionsbanden, die auf das Polymer, insbesondere das Polycarbonat selbst zurückzuführen sind; d.h. der mittlere Transmissionsgrad der Substratschicht im Bereich zwischen 780 und 2500 nm beträgt mindestens 10 %, bevorzugt mindestens 30 %, weiter bevorzugt mindestens 50 %), enthält weniger als 0,001 Gew.-% Ruß, weiter bevorzugt weniger als 0,0001 Gew.-% Ruß, bevorzugt überhaupt keinen Ruß und bevorzugt weniger als 0,001 Gew.-% besonders bevorzugt weniger als 0,0001 Gew.-% von Ruß verschiedene IR-Absorber und insbesondere keine von Ruß verschiedenen IR-Absorber. Unter dem mittleren Transmissionsgrad versteht man das arithmetische Mittel des nach ISO 13468-2:2006 gemessenen Transmissionsgrads.

Die Lichttransmission im Bereich von 380 bis 780 nm, d.h. im VIS-Bereich, beträgt bei dieser Ausführungsform weniger als 1,0 %, bevorzugt 0%, bestimmt bei einer Schichtdicke von 4 mm nach DIN ISO 13468-2:2006 (D65, 10°), und der T_{DS}-Wert, bestimmt nach ISO 13837:2008 bei einer Schichtdicke von 4 mm, beträgt weniger als 40%, bevorzugt weniger als 38%.

Die Verwendung einer solchen IR-transparenten Substratschicht, insbesondere einer solchen auf Basis von Polycarbonat, ist erfindungsgemäß besonders bevorzugt.

Von Ruß verschiedene IR-Absorber, welche alleine oder in Mischung eingesetzt werden können, sind beispielsweise Wolframate, insbesondere Cäsiumwolframat oder Zink-dotiertes Cäsiumwolframat, Boride wie LaB₆, ATO (Antimon-Zinn-Oxid) oder ITO (Indium-Zinn-Oxid. Ferner sind organische IR-Absorber bekannt. Geeignete IR-absorbierende organische Verbindungen sind z. B. in M. Matsuoka, Infrared absorbing dyes, Plenum Press, New York, 1990, stoffklassenmäßig beschrieben worden. Besonders geeignet sind solche aus den Stoffklassen der Phthalocyanine, der Naphthalocyanine, der Perylene, der Quaterylene, der Metallkomplexe, der Azofarbstoffe, der Anthraquinone, der Quadratsäurederivate, der Immoniumfarbstoffe sowie der Polymethine. Davon sind ganz besonders Phthalocyanine und Naphthalocyanine geeignet.

Besonders geeignete NIR-Farbstoffe sind aufgrund ihrer thermischen Beständigkeit Phthalocyanine und Naphthalocyanine. Aufgrund der verbesserten Löslichkeit in Thermoplasten sind Phthalocyanine und Naphthalocyanine mit sperrigen Seitengruppen vorzuziehen.

Es sind auch Mischungen verschiedener NIR-Absorber geeignet.

Eine alternativ bevorzugte Substratschicht b ist Ruß-gefüllt. Bei dieser Ausführungsform beträgt die Lichttransmission im Bereich von 380 bis 780 nm, d.h. im VIS-Bereich, bestimmt bei einer Schichtdicke von 4 mm nach DIN ISO 13468-2:2006 (D65, 10°), weniger als 1,0 %, bevorzugt 0%, und der TDs-Wert, bestimmt nach ISO 13837:2008 bei einer Schichtdicke von 4 mm, beträgt weniger als 1 %. Dabei enthält die Substratschicht b vorzugsweise mindestens 0,04 Gew.-% Ruß, weiter bevorzugt mindestens 0,08 Gew.-%, besonders bevorzugt mindestens 0,15 Gew.-% Ruß.

Die Herstellung von drei-dimensional geformten Substratschichten b, aber auch plattenförmigen Schichten, ausgehend von der beschriebenen Polymer-Zusammensetzung, enthaltend die oben genannten Komponenten, erfolgt mit gängigen Einarbeitungsverfahren durch Zusammenführung, Vermischen und Homogenisieren, wobei insbesondere die Homogenisierung, bevorzugt in der Schmelze unter Einwirkung von Scherkräften, stattfindet. Dazu werden das thermoplastische Polymer, bevorzugt aromatisches Polycarbonat, und die ggf. weiteren Komponenten der Polymer-Formmasse, bevorzugt der Polycarbonat-Formmasse, auf üblichen Schmelze-Mischaggregaten wie z.B. auf Ein- oder Mehrwellen-Extrudern oder auf Knetern in der Schmelze unter üblichen Bedingungen vermischt, extrudiert und granuliert. Die Additive können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich bevorzugt um einen Zweiwellenextruder, besonders bevorzugt um einen Zweiwellenextruder mit gleichsinnig rotierenden Wellen, wobei der Zweiwellenextruder ein Längen/Durchmesser-Verhältnis der Schneckenwelle bevorzugt von 20 bis 44, besonders bevorzugt von 28 bis 40 aufweist. Ein derartiger Zweiwellenextruder umfasst eine Aufschmelz- und Mischzone oder eine kombinierte Aufschmelz- und Mischzone und optional eine Entgasungszone, an der ein absoluter Druck p von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, besonders bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

Neben dem Extrudieren können die für die Substratschicht b eingesetzten Zusammensetzungen durch Heißpressen, Spinnen, Blasformen, Tiefziehen oder Spritzgießen in die Substratschicht b überführt werden. Bevorzugt ist hierbei das Spritzgießen oder Spritzprägen.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder in "Anleitung zum Bau von Spritzgießwerkzeugen", Menges/Michaeli/Mohren, München; Wien: Hanser, 1999, ISBN 3-446-21258-2 beschrieben.

Spritzguss umfasst hier alle Spritzgießverfahren einschließlich Mehrkomponentenspritzguss und Spritzprägeverfahren.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden.

Die Substratschicht b weist eine Dicke von 1,0 mm bis 7,0 mm, weiter bevorzugt von 2,0 mm bis 6,0 mm, besonders bevorzugt von 3,0 mm bis 5,5 mm auf.

Die Dicke der Schicht b wir bevorzugt mittels Mikrometerschraube bestimmt.

### Schicht c

Neben der Schicht b kann eine zusätzliche Schicht c aus thermoplastischem Kunststoff vorhanden sein.

Als thermoplastische Kunststoffe für die optionale Schicht c sind bevorzugt aromatisches Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), aliphatische Polyolefine wie Polypropylen oder Polyethylen, cyclisches Polyolefin, Poly- oder Copolyacrylate oder Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona), Polycarbonat-Blends mit olefinischen Copolymeren oder Pfropfpolymeren, wie beispielsweise Styrol/Acrylnitril Copolymeren geeignet.

Besonders bevorzugt sind PMMA, PET, PEN, PETG, Polycarbonat, Co-Polycarbonat oder Polyestercarbonat. Ganz besonders bevorzugt ist PMMA, PET oder PEN. Hierbei können die vorgenannten Polymere alleine oder in Mischungen eingesetzt werden.

Schicht c weist eine Dicke von bis zum 600 µm, bevorzugt bis 500 µm auf. Schicht c kann auch eine Abfolge mehrere Schichten sein, wobei deren Gesamtdicke die genannten Grenzen nicht überschreitet.

Bevorzugte Foliendicken der thermoplastischen Schicht c sind 10 µm bis 500 µm. Besonders bevorzugte Foliendicken sind 20 µm bis 250 µm. Ganz besonders bevorzugt sind 25 µm bis 125 µm dicke Folien als Trägermaterial, um die Metallschicht d aufzubringen, denn besonders bevorzugt wird Schicht c zusammen mit der Metallschicht d auf die Substratschicht b aufgebracht. Dabei handelt es sich bei der Kombination Metallschicht d und Schicht c bevorzugt um eine Metallschicht, die auf eine Schicht c aus thermoplastischem Material als Trägermaterial, insbesondere auf der Basis eines Polyesters, ganz besonders bevorzugt auf der Basis von Polyethylenterephthalat, aufgebracht ist.

Die Schicht c kann durch dem Fachmann bekannte Verfahren auf die Schicht b aufgebracht werden. Insbesondere ist ein Mehrkomponentenspritzgießen oder eine Klebebefestigung geeignet.

Die Schichtdicke der Schicht c kann beispielsweise mittels Foliendickenmessgerät oder über Querschnittspräparation und mikroskopische Erfassung (über Lichtmikroskopie oder Rasterelektronenmikroskopie) der Schichten über Materialkontrast die Dicke erfasst werden.

### Metallschicht d

Die Metallschicht d ist auf der Seite der Substratschicht b angeordnet, welche dazu bestimmt ist, zum Fahrzeuginnenraum hin orientiert zu sein. Bei einem Dachmodul oder dem Teil eines Dachmoduls als Karosserieteil ist dieses die Unterseite. Die Metallschicht bedeckt die Substratschicht b vollständig oder zumindest in dem Teil des Mehrschichtkörpers, der nicht durch Schwarzränder bzw. Rahmenelemente im Randbereich des Karosserieteils abgedeckt ist, vollständig.

Neben der vorteilhaften Auswirkung auf das Wärmemanagement hat die Positionierung der Metallschicht auf der Seite der Substratschicht b, welche der Sonne abgewandt ist, den Vorteil, dass die Metallschicht vor Witterungseinflüssen geschützt ist.

Im einfachsten Fall ist die Metallschicht vollreflexiv analog einer Spiegelschicht ausgeführt. Neben den einschlägigen Vakuumverfahren zur Aufbringung der Metallschichten, insbesondere SputterVerfahren, sind auch Methoden der Galvanisierung und der nasschemischen Abscheidung denkbar. Die Verfahren sind näher beschrieben z.B. in "Vakuumbeschichtung Bd. 1 bis 5", H. Frey, VDI-Verlag, Düsseldorf, 1995 oder in "Oberflächen- und Dünnschicht-Technologie" Teil 1, R.A. Haefer, Springer, Verlag 1987.

Um eine bessere Metallhaftung zu erreichen und um die Substratoberfläche zu reinigen, wird die zu beschichtende Oberfläche normalerweise einer Plasmavorbehandlung unterzogen. Eine Plasmavorbehandlung kann u. U. die Oberflächeneigenschaften von Polymeren verändern. Diese Methoden sind z.B. bei Friedrich et al. in "Metallized plastics 5 & 6: Fundamental and applied aspects" und in H. Grünwald et al. "Surface and Coatings Technology, 111 (1999), 287-296" beschrieben.

Die Metallschicht enthält bevorzugt mindestens ein Element, ausgewählt aus Ag, Al, Au, Pt, Fe, Cr, Sn, In, Ti, Pd, Nb, Cu, V, Edelstahl oder deren Legierungen. Bevorzugt ist die Schicht eine Aluminium-Schicht, einer Silberschicht oder eine Kupferschicht, ganz besonders bevorzugt eine Silberschicht. Bevorzugt ist die Metallschicht einseitig oder beidseitig von einer bzw. von mehreren Metalloxid oder Metallnitrid-Schichten eingefasst, welche das homogene Abscheiden von Metall ermöglichen und/oder das Metall als Schutzschicht oder Opferschicht schützen. Diese Schichten zählen erfindungsgemäß nicht zur eigentlichen Metallschicht. Geeignete Oxide und/oder Nitride sind insbesondere Aluminiumoxid, Titandioxid, Siliciumoxid SiOₓ, Tantalpentoxid Ta₂O₅, Zirkonoxid, Zirkondioxid, Niobiumoxid, Hafniumoxid, Zink-Zinnoxid, Indium-Zinnoxid, Aluminium-Zinkoxid, Siliziumnitrid, Bornitrid oder Titannitrid. Diese Schichten zählen jedoch nicht zu der Metallschicht, sondern sind zwischen der Schicht c und d angeordnet oder aber an der Unterseite des Karosserieteils, d.h. der der Sonne abgewandten Seite der Metallschicht d.

Die Metallschicht kann auch zwei oder mehr Metallschichten d', d" etc. umfassen, deren Dicken sich zur Gesamtdicke der Metallschicht d addieren. Diese können eine Schichtenfolge mit Metalloxid/-nitrid-Schichten bilden.

Eine erfindungsgemäß geeignete Metallschicht d setzt sich bei einer Ausführungsform aus einer Metallschicht, insbesondere einer Metallschicht aus Silber oder Aluminium, die ggf. zwischen zwei Beschichtungen, die nicht zur Metallschicht zählen, aus einem dielektrischen Material wie Metalloxid oder Metallnitrid angeordnet ist, zusammen. Ein solcher Aufbau wird im Allgemeinen durch eine Abfolge von Abscheidevorgängen erzeugt, die durch ein Vakuumverfahren wie die gegebenenfalls magnetfeldgestützte Kathodenzerstäubung oder Aufdampfverfahren realisiert wird. Es können auch zwei sehr feine Metallschichten auf beiden Seiten der Silberschicht aufgebracht sein, die untere Schicht als Haft- bzw. Keimbildungsschicht und die Deckschicht als Opferschicht, um die Oxidation des Silbers zu verhindern, wenn die dielektrische Schicht, die darauf kommt, aus einem Oxid besteht, das durch reaktive Kathodenzerstäubung oder reaktives Aufdampfen in Gegenwart von Sauerstoff aufgebracht wird.

Ein Beispiel für eine entsprechende Abfolge von Metallen bzw. Legierungen und/oder Oxiden auf der Substratschicht ist Substrat/Zinnoxid/NiCr/Silber/NiCr/Zinnoxid.

Ein weiteres Beispiel ist Substrat/Zinnoxid/Silber/Kupfer/Zinnoxid.

Ein weiterer Schichtaufbau ist "Substrat/Zinnoxid/Zinkoxid/Titanoxid/-Indiumzinnoxid oder Bismutoxid-/-Silber oder eine Silberlegierung, enthaltend 5 bis 10 Gew.-% Kupfer und/oder Titan oder Edelstahl (z.B. 316)-/Zinnoxid/Zinkoxid/Titanoxid/Indiumzinnoxid oder Bismutoxid".

Eine weitere Schichtenfolge ist Substrat/Zinkoxid/Niob/Silber/Niob/Zinkoxid/Siliciumnitrid oder sind weitere Kombinationen dieser Abfolge.

Eine geeignete Schichtenfolge beginnt mit dem Substrat, gefolgt von einer 20 nm bis 50 nm dicken dielektrischen Schicht wie Titanoxid, Zinnoxid, Si₃N₄ oder Zinkoxid (Sputterschicht). Der Brechungsindex beträgt bevorzugt 2,0 bis 2,5. Die dritte Schicht ist eine dünne Barriereschicht (0,5-1,5 nm) oder Haftschicht/Verbindungsschicht aus einer Nickel-Chrom-Legierung, Nickel-Chromnitrid (NiCrNx) oder Titan. Bei einigen Anwendungen wird diese Schicht auch weggelassen. Eine vierte Schicht besteht insbesondere aus einer Silberschicht mit einer Dicke von ca. 6 bis 20 nm, welche lichtdurchlässig ist. Die fünfte Schicht ist eine Schutz- oder Opferschicht aus Nickel-Chrom-Legierung, NiCrNx, oder Titan. Die Titanschicht kann ggf. oxidiert sein. Eine sechste Schicht, eine Schutz oder Passivierungsschicht, besteht typischerweise aus Siliciumnitrid (Si₃N₄), Zinnoxid oder Titanoxid, insbesondere in 25 bis 45 nm Dicke. Alle dünnen Schichten werden über Sputtertechnologie oder Reaktivsputtern aufgebracht.

Sofern eine Metalloxidschicht oder eine Metallnitridschicht die äußere, untere Schicht des Mehrschichtkörpers bildet, umfasst der Mehrschichtkörper bevorzugt keine Schutzschicht e, da die Metalloxidschicht selbst als Opferschicht wirkt.

Am oben genannten Schichtaufbau können diverse Modifizierungen vorgenommen werden. Beispielsweise können zwei Schichten Silber verwendet werden oder es können andere Schichtdicken verwendet werden. Hierdurch lassen sich verschiedene visuelle Effekte erzielen, z.B. eine dunkelgraue Farbe oder ein Spiegeleffekt oder ein Bronze-artiger Farbeindruck.

Die Gesamtdicke der Metallschicht d beträgt von 40 nm bis 500 µm, bevorzugt 50 nm - 10µm, weiter bevorzugt 65 nm - 1000 nm, ganz besonders bevorzugt 70 nm bis 200 nm. Der T_{DS}-Wert des Mehrschichtkörpers beträgt bevorzugt weniger als 1 %, bestimmt nach ISO 13837:2008.

Sofern die Metallschicht eine Aluminiumschicht bzw. eine Kombination aus mehreren Aluminiumschichten, ggf. unterbrochen von Oxid- oder Nitridschichten als Schutzschichten, ist, beträgt die Gesamtdicke der Metallschicht - ohne die Oxid- bzw. Nitridschichten- bevorzugt mindestens 70 nm. Für Silber beträgt die bevorzugte Mindestdicke 120 nm, für Titan 145 nm, für Chrom 150 nm, für Gold 175 nm und für Kupfer 185 nm.

Die Schichtdicke der Schicht d kann beispielsweise mittels Oberflächenwiderstandsmessung oder über Querschnittspräparation und mikroskopische Erfassung (über Lichtmikroskopie oder Rasterelektronenmikroskopie) der Schichten über Materialkontrast die Dicke erfasst werden.

### Optionale Schutzschicht e

Mit der Schutzschicht e, die sich aus einer oder mehreren Schichten e', e" etc. zusammensetzen kann, sind Schutzschichten gemeint, die die darüber liegende Metallschicht bzw. Metall-artigen Schichten vor äußeren Einflüssen schützen, d.h. vor Korrosion schützen oder auch vor anderen äußeren Einflüssen wie Reinigungsmitteln, Kratzern etc. und keine Metalloxid- oder Metallnitridschicht sind. Derartige Schutzschichten können in einem PECVD-Prozess (plasma enhanced chemical vapour deposition) oder Plasmapolymerisationsprozess aufgebracht werden. Hierbei werden niedrigsiedende Precursor, insbesondere solche auf Siloxan-Basis, in ein Plasma verdampft und dadurch aktiviert, so dass sie einen Film bilden können. Typische Substanzen hierbei sind Hexamethyldisiloxan (HMDSO), Tetramethyldisiloxan, Decamethylcyclopentasiloxan, Octamethylcyclotetrasiloxan und Trimethoximethylsilan, wobei Hexamethyldisiloxan besonders bevorzugt ist.

Bevorzugt ist Schicht e eine Siloxan-haltige Schicht, weiter bevorzugt eine Hexamethyldisiloxanhaltige Schicht, besonders bevorzugt eine Plasmapolymerschicht enthaltend Hexamethyldisiloxan.

In einer Ausführungsform wird die Schutzschicht e aus einer leitfähigen Schicht, z.B. aus einer ITO-haltigen-Schicht, gebildet, hierbei enthält die Schicht bevorzugt mehr als 50 % ITO. Ferner kommen leitfähige Schichten aus Zinksulfid, Silberchlorid, Zinkselenid und Cadmiumtelurid in Frage.

Die Dicke der Schutzschicht e insgesamt beträgt maximal 50 nm, bevorzugt weniger als 50 nm, ganz besonders bevorzugt weniger als 35 nm. Bevorzugt wird die Metallschicht zum Schutz vor Oxidation oder sonstiger Beschädigung mit einer oder mehreren weiteren Schichten e', e" etc. versehen, welche die Schutzschicht e bilden.

Die Schutzschicht e enthält bevorzugt kein Metall. Die Schutzschicht e kann ebenso wie die Schutzschicht a eine Kratzfestbeschichtung sein.

Bevorzugt folgt auf Schutzschicht e, bzw. auf Metallschicht d, wenn keine Schutzschicht e vorhanden ist, was bei Metallschichten aus Gold und/oder Platin eine bevorzugte Ausführungsform ist, keine weitere Schicht. Ganz besonders bevorzugt umfasst der Mehrschichtkörper des erfindungsgemäßen Karosserieteils keine Schichten außer den Schichten a, b, ggf. c, d, ggf. e und ggf. vorhandenen Klebeschichten.

Bevorzugt werden für die Klebeschichten, etwa zur Verbindung der Schichten b und c, als Klebstoffe so genannte PSA, Pressure Sensitive Adhesives, eingesetzt. Unter PSA versteht man Kleber, die bereits bei Raumtemperatur permanent klebrig sind und eine innige Haftung zu anderen Oberflächen aufweisen. Diese Haftung tritt bereits bei Ausübung eines leichten Drucks, wie er beispielsweise mit Fingerkraft ausgeübt werden kann, ein.

Verbindungsklassen für PSA sind beispielsweise Acrylate, Polyurethane, Polyalphaolefine, Silicone oder klebrig gemachter natürlicher oder synthetischer Kautschuk.

Weiterhin kann klebrig-gemachtes OTP als Klebstoff, wie in US-Patentnummer 7,371,464 B2 (Sherman et al.) beschrieben, verwendet werden.

Weitere bevorzugte Klebstoffe sind "nicht-silikonbasierte-Haftkleber", die unter Anderem in WO 2009/085662 A2 mit dem Titel "Urea-Based Pressure Sensitive Adhesives" sowie in US 2012/0100326 A1 mit dem Titel "Urethane-Based Pressure Sensitive Adhesives" beschrieben werden.

Bevorzugt sind im Rahmen der Erfindung Klebstoffe aus der Klasse der optisch klaren druckempfindlichen Acrylklebstoffe. Kommerziell verfügbare Acrylklebstoffe sind Laminating Adhesive 8141 oder Laminating Adhesive 8171, 8172 und 8173D von der Firma 3M.

Die Klebstoffzusammensetzung kann zum Beispiel ein Haftkleber, ein wärmehärtender Klebstoff, ein Schmelzklebstoff oder eine Kombination davon sein.

Die Schichtdicke der Schicht e kann beispielsweise mittels Stufenabtaster (z.B. KLA Tencor Alpha-Step 500 Surface Profiler von Tencor Instruments) oder über Querschnittspräparation und mikroskopische Erfassung (über Lichtmikroskopie oder Rasterelektronenmikroskopie) der Schichten über Materialkontrast die Dicke erfasst werden.

Neben den beschriebenen Schichten kann der Mehrschichtkörper optional noch eine oder mehrere weitere Funktions-, Verbindungs- oder Schutzschichten umfassen, die kein Metall enthalten.

Insbesondere kann der Mehrschichtkörper des erfindungsgemäßen Karosserieteils einen Schwarzrand bzw. verstärkende Rahmenelemente aufweisen. Bei einem Schwarzrand handelt es sich um eine nicht-transparente Schicht, vorzugsweise aus einem Polymerblend, weiter bevorzugt aus einem Polycarbonatblend, insbesondere mit Polycarbonat als überwiegend vorhandener Komponente. Eine solche nicht-transparente Schicht ist in weiten Bereichen in direktem Kontakt mit dem zuvor beschriebenen Schichtaufbau mit den Schichten a) bis e). Der Schwarzrand liegt entweder außerhalb der Schichtenfolge a) bis e) oder zwischen den Schichten a) und b) oder d) und e).

Bevorzugt umfasst bzw. rahmt dieser nicht transparente Werkstoff die Substratschicht b oder und weitere hiermit direkt oder indirekt verbundene Schichten oder alternativ den gesamten Mehrschichtaufbau ganz oder teilweise in den Randbereichen ein. Bei einer Anformung des nicht transparenten Materials liegt der Übergang der Materialien vorzugsweise in Kantenbereichen, so dass eventuell auftretende Unebenheiten kaschiert werden. In jedem Fall gibt es Bereiche, in denen die Substratschicht b auf der nicht-transparenten Schicht bzw. die nicht-transparente Schicht auf der Substratschicht b liegt. "Auf ...liegt" meint hierbei ein Überlappen der Schichten, wenn man auf den Mehrschichtkörper, senkrecht zur Verbindungsfläche der einzelnen Schichten, blickt. Es versteht sich, dass die nicht transparente Schicht nicht in direktem Kontakt mit der Substratschicht b sein muss, nur kann, da sie hinter weiteren Schichten, etwa Schicht c, angeordnet sein kann.

Für die Herstellung von Schwarzrändern beziehungsweise verstärkenden Rahmenelementen bietet sich als Material die Verwendung thermoplastischer Kunststoffe, enthaltend Füll- beziehungsweise Verstärkungsstoffe, insbesondere die Verwendung von derart ausgerüsteten Kunststoff-Blends an. In diesem Zusammenhang sind Blends, enthaltend Polycarbonat und mindestens einen weiteren thermoplastischen Kunststoff, bevorzugt.

Die verwendeten Füll- und Verstärkungsstoffe können faser-, plättchen-, röhren-, stäbchen- oder kugelförmig bzw. sphärisch oder partikulär sein. Zu den im Sinne der vorliegenden Erfindung geeigneten Füll- und Verstärkungsstoffen zählen beispielsweise Talk, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes. Bevorzugte Füllstoffe sind Füllstoffe, die ein isotropes Schwindungsverhalten der Zusammensetzung bewirken.

Im Rahmen der vorliegenden Erfindung ist die Verwendung von Talk und Kurzglasfasern besonders bevorzugt.

Glas- oder Keramikkugeln oder -hohlkugeln können dabei die Kratzfestigkeit dieser Oberfläche erhöhen.

In den Zusammensetzungen der Substratschicht b, sofern Füll- und/oder Verstärkungsstoffe enthalten sind, beträgt deren Anteil bevorzugt 5 Gew.-% bis 40 Gew.-%, vorzugsweise 7 Gew.-% bis 30 Gew.-%, weiter bevorzugt 8 Gew.-% bis 25 Gew.-%., wobei sich die Gewichtsangaben auf die Gesamtzusammensetzung von der Substratschicht b) beziehen.

Ein erfindungsgemäßes Karosserieteil umfasst einen Mehrschichtkörper, umfassend in dieser Reihenfolge
a) optional eine Schutzschicht a,
b) eine Substratschicht b mit einer Dicke von 1,0 bis 7,0 mm auf Basis eines thermoplastischen Polymers, bevorzugt aromatisches Polycarbonat, aufweisend
   eine Lichttransmission im Bereich von 380 bis 780 nm von weniger als 1,0 %, bestimmt bei einer Schichtdicke von 4 mm nach DIN ISO 13468-2:2006 (D65, 10°), und
   eine Energietransmission T_{DS} von weniger als 40%, bestimmt nach ISO 13837:2008 bei einer Schichtdicke von 4 mm,
   wobei die Zusammensetzung der Substratschicht > 0,08 Gew.-% Farbmittel enthält,
c) ggf. eine weitere Schicht c auf Basis eines thermoplastischen Polymers mit einer Maximaldicke von 600 µm,
d) eine Metallschicht d, enthaltend mindestens ein Element, ausgewählt aus Ag, Al, Au, Pt, Fe, Cr, Sn, In, Ti, Pd, Nb, Cu, V, Edelstahl oder deren Legierungen, mit einer Dicke von 40 nm bis 500 µm und
e) optional eine Schutzschicht e,
wobei
die Metallschicht d auf der Seite des Mehrschichtkörpers angeordnet ist, die dazu bestimmt ist, zum Fahrzeuginneren hin orientiert zu sein und wobei
die auf die Schicht d folgenden Schichten, einschließlich der Schutzschicht e, in Summe eine Dicke von maximal 50 nm aufweisen.

Besonders bevorzugte Ausführungsformen dieses Karosserieteiles ergeben sich durch die für die einzelnen Merkmale als "bevorzugt", "weiter bevorzugt" etc. herausgehobenen Varianten.

Die erfindungsgemäßen Karosserieteile, umfassend die beschriebenen opaken Mehrschichtkörper, sind für Infrastruktur- oder Mobilitätsanwendungen sowohl für Land-, Wasser- als auch Luftfahrzeuge geeignet, und können dort zum solaren Wärmemanagement, bevorzugt als Dachmodule oder Teile von Dachmodulen, eingesetzt werden. Die erfindungsgemäßen Karosserieteile zeichnen sich dadurch aus, dass sie den jeweiligen Innenraum, wie z.B. eine Fahrgastzelle, vor Erwärmung durch solare Einstrahlung schützen.

Die erfindungsgemäßen Karosserieteile können überall dort Verwendung finden, wo es um den Schutz vor Wärmestrahlung, insbesondere den Schutz vor solarer Wärmeeinstrahlung, geht. Grundsätzlich könnten solche Bauteile aber auch im Arbeitsschutz, wo es um den Schutz vor Strahlung industriell erzeugter Wärmequellen geht, eingesetzt werden.

Gegenstand der Erfindung sind somit außerdem Dächer bzw. Dachmodule, Blenden, Verkleidungen, Rahmen, insbesondere Dächer oder Dachmodule, insbesondere für den Einsatz in Kraftfahrzeugen und Schienenfahrzeugen, Wasser- und Luftfahrzeugen, insbesondere in Kraftfahrzeugen, aus den bzw. umfassend die erfindungsgemäßen Karosserieteile.

Karosserieteile umfassend bzw. aus den opaken Mehrschichtkörpern können im Fahrzeugbau auf beliebige Trägersysteme aus Metall oder Kunststoff aufgebracht werden. Dies kann mittels spezieller Klebesysteme, wie z.B. Polyurethan-basierter Klebesysteme geschehen.

Großflächige Systeme, wie z.B. Dachmodule aus oben genannten Mehrschichtkörpern, werden bevorzugt so verbaut, dass die Rückseite, d.h. die Schicht d, ggf. mit Schicht e, visuell nicht sichtbar ist. Dabei kommen neben den oben genannten Trägersystemen auch Verkleidungsmaterialien wie Baumwolle, PU-Schaumstoff etc. zur Verkleidung des jeweiligen Moduls zum Einsatz. Derartige Verkleidungen werden so angebracht, dass zwischen der Schicht d und dem Verkleidungsmaterial einige mm Abstand gelassen wird, um den Effekt des Mehrschichtkörpers nicht zu beeinträchtigen. Die Schicht d und optional die Schicht e darf also nicht großflächig mit oben genannten Materialien verklebt werden.

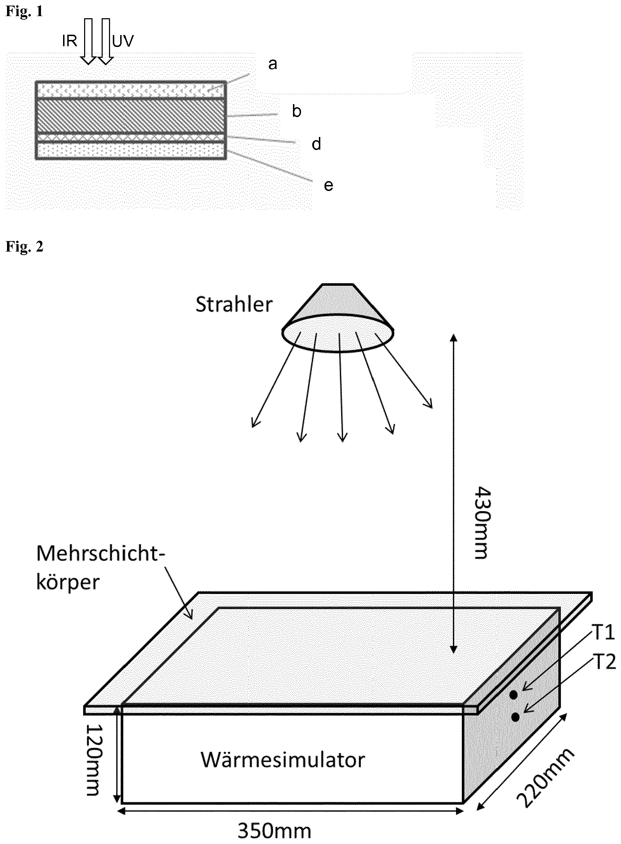

**Figur 1** zeigt ein erfindungsgemäßes Karosserieteil, etwa einen Ausschnitt eines Dachmoduls, insbesondere eines Kfz-Fahrzeugs, auf das von der Sonne ausgesandte Strahlung trifft. Die auf den Mehrschichtkörper auftreffende Strahlung umfasst Strahlung aus dem VIS-Bereich des Spektrums, d.h. etwa 380 nm bis 780 nm, und IR-Strahlung. Der Mehrschichtkörper umfasst eine Kratzfestbeschichtung - Schutzschicht a-, die Substratschicht b, eine Metallschicht d und eine Schutzschicht e zum Schutz der Metallschicht d vor Korrosion. Die Metallschicht d liegt auf der Seite der Substratschicht b, welche der Strahlungsquelle, gegenüber der die Abschirmung erfolgt, bei einem Dachmodul die Sonne, gegenüberliegt.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindungsbeschreibung zur Anwendung kommen, sofern nichts Gegenteiliges beschrieben worden ist.
**Substrat 1:** Polycarbonat der Firma Covestro Deutschland AG mit einer MVR von ca. 12 cm³/(10 min), gemessen bei 300 °C und 1,2 kg Belastung (gemäß ISO 1133-1:2012-03), basierend auf Bisphenol A und terminiert mit Phenol. Das Material enthält 0,1 Gew.-% Macrolex Grün 5B (1,4-Bis-(tolylamino)anthranchinon; Anthrachinonfarbstoff; Solvent Green 3; Color Index 61565) der Firma Lanxess AG und 0,1 Gew.-% Macrolex Violett 3R (Anthrachinonfarbstoff; Solvent Violet 36; Color-Index-Nummer 61102) der Firma Lanxess AG. Das Polycarbonat weist eine Lichttransmission im VIS-Bereich des Spektrums (380 bis 780 nm) von ca. 0 % auf.
**Substrat 2:** Polycarbonat der Firma Covestro Deutschland AG mit einer MVR von ca. 12 cm³/(10 min), gemessen bei 300 °C und 1,2 kg Belastung (gemäß ISO 1133-1:2012-03); basierend auf Bisphenol A und terminiert mit Phenol. Das Material enthält 0,16 Gew.-% Ruß und weist eine Lichttransmission im VIS-Bereich des Spektrums (380 bis 780 nm) von 0 % auf.
**Substrat 3:** Transparente Polycarbonatplatte aus mit einer MVR von ca. 12 cm³/(10 min), gemessen bei 300 °C und 1,2 kg Belastung (gemäß ISO 1133-1:2012-03), der Firma Covestro Deutschland AG.
   Die Platten wurden im Spritzgussprozess erzeugt und wiesen eine Dicke von 4 mm auf.
**Substrat 4:** Extrudierte PMMA-Platte der Firma Evonik GmbH, Plexiglas XT, Farbe Schwarz 9N870GT, Plattendicke: 3 mm.
**Substrat 5:** Gegossene PMMA-Platte der Firma Evonik GmbH, Plexiglas GS, Farbe Schwarz 9C20GT, Plattendicke: 3 mm, IR-transparent.

Die Lichttransmission im VIS-Bereich des Spektrums (380 bis 780 nm, Transmissionsgrad T_{VIS}) wurde bestimmt nach DIN ISO 13468-2:2006 (D65, 10°, Schichtdicke der Musterplatte: 4 mm).

Der direkte solare Transmissionsgrad T_{DS} des Substratmaterials bei einer Schichtdicke von 4 mm wurde nach ISO 13837:2008 bestimmt. Die Transmissionsmessungen wurden an einem Lambda 950 Spektralphotometer der Firma Perkin Elmer mit Photometerkugel durchgeführt. Alle Werte wurden bei einer Messung mit Wellenlängen von 320 nm bis einschließlich 2500 nm mit Δλ 5nm bestimmt.

Unter dem mittleren IR-Transmissiongrad wird das arithmetische Mittel des Transmissionsgrades im Wellenlängenbereich von 780 bis 2500 nm verstanden, welcher bei einer Schichtdicke von 4 mm nach ISO 13468-2:2006 bestimmt wird.

**Tabelle 1: Transmissionsdaten der Substratmaterialien**

| | **Dicke** | **TVIS (%)** | **T_{DS} (%)** | **Mittlerer IR-Transmissionsgrad (%)** |
|---|---|---|---|---|
| Substrat 1 | 4 mm | 0 | 37,4 | 56 |
| Substrat 2 | 4 mm | 0 | <1 | <1 |
| Substrat 3 | 4 mm | 88 | 59 | 56 |
| Substrat 4 | 3 mm | 0 | 0 | 0 |
| Substrat 5 | 3 mm | 0 | 31,9 | 52,5 |

### Metallschicht M1:

Über einen Sputterprozess wurden eine ca. 200 nm dicke Schicht Aluminium auf dem entsprechenden Substrat abgeschieden.

Die Beschichtungsanlage bestand aus einer Vakuumkammer, in welcher die Proben auf einem rotierenden Probenhalter positioniert wurden. Der Probenhalter rotierte mit ca. 20 U/min. Die Prüfkörper wurden, bevor sie in die Vakuumkammer eingebracht wurden, mit ionisierter Luft abgeblasen, um sie von Staub zu befreien. Danach wurde die Vakuumkammer, enthaltend den Prüfkörper, auf einen Druck p ≤ 1· 10⁻⁵ mbar evakuiert. Unter diesem reduzierten Druck wurden die Proben metallisiert. Dafür wurde Argon-Gas mit einem Druck von 5· 10⁻³ mbar eingelassen. Mittels DC-Magnetron wurde eine Aluminium-Schicht von ca. 200 nm Dicke aufgebracht.

### Metallschicht M2:

M2 war eine metallhaltige Folie, umfassend eine PET-Trägerfolie, aufweisend eine Dicke von 50 µm, und einen Wechselschichtaufbau aus Silberschichten sowie Indiumoxidschichen, wobei die Gesamtdicke des Wechselschichtaufbaus 150 nm betrug. Die Gesamtdicke der Silberschichten betrug dabei 18 nm. Die metallhaltige Folie wurde mittels eines Acrylatklebstoffes auf die Unterseite der Substratschicht b laminiert. Damit wurde die Metallschicht vom Polycarbonatsubstrat und der PET-Trägerfolie eingeschlossen.

### Metallschicht M3:

M3 war eine metallhaltige Folie, umfassend eine PET-Trägerfolie, aufweisend eine Dicke von 50 µm, und einen Wechselschichtaufbau aus Silberschichten sowie Indiumoxidschichten, wobei die Gesamtdicke des Wechselschichtaufbaus 150 nm betrug. Die Gesamtdicke der Silberschichten betrug dabei 18 nm. Die PET-Trägerfolie wurde mittels eines Acrylatklebstoffes auf die Unterseite der Substratschicht b laminiert. Damit wurde die PET-Trägerfolie vom Polycarbonatsubstrat und der Silber-Schicht eingeschlossen und die Metallschicht bildete die unterste Schicht.

### Schutzschicht 1 (Schutzschicht e):

Mittels Plasmapolymerisation wurde bei Beispiel 8 und bei Beispiel 9 eine Korrosionsschutzschicht aus Hexamethyldisiloxan (HMDSO) auf die Metallschicht aufgebracht. Dazu wurde HMDSO verdampft und der Dampf in die Vakuumkammer eingelassen, bis sich ein Druck von ca. 0,07 mbar ergab. Danach wurde ein Plasma mit einer Diodenanordnung bei 1000W gezündet und während einer Minute die Korrosionsschutzschicht aufgebracht. Die Diodenanordnung bestand aus zwei parallelen Metallelektroden, die mit einer Wechselfrequenz von 40 kHz betrieben wurden.

### Schutzschicht 2 (Schutzschicht a):

Die Beschichtung wurde per Hand durchgeführt. Hierbei wurde die flüssige Primer- oder Lacklösung zur Ausbildung der Schutzschicht ausgehend von der oberen Kante des Kleinteiles in Längsrichtung über die Platte gegossen, während gleichzeitig der Ansatzpunkt des Lackes auf der Platte von links nach rechts über die Plattenbreite geführt wurde. Die lackierten Platten wurden senkrecht an einer Klammer hängend nach einer Ablüftzeit von 30 Minuten bei 23°C und anschließend 60 Minuten bei 130°C gehärtet. Im Anschluss an das Aufbringen der Primerschicht wurde in analoger Weise der Decklack bzw. Hardcoat aufgebracht und nach 30-minütiger Ablüftzeit bei 23°C 60 Minuten bei 130°C gehärtet.

### Messaufbau:

Die Mehrschichtkörper wurden in einem Wärmesimulator getestet (Versuchsaufbau s. Figur 2). Der Wärmesimulator bestand aus einem metallischen Behältnis mit den Abmessungen B x H x T von 220 mm x 350 mm x 120 mm. Die Wände waren ca. 2 mm dick. Auf der Innenseite waren die Wände mit ca. 20 mm schwarzer Isolation belegt. Der Boden bestand ebenfalls aus einer schwarzen Isolationsschicht von ca. 20 mm Dicke. Im Innenraum waren zwei Thermoelemente eingesetzt. Ein Thermoelement befand sich ca. 70 mm unterhalb der Oberkannte des Behältnisses und konnte damit die durch den Mehrschichtkörper oder vom Mehrschichtkörper ausgehende Strahlung direkt aufnehmen (T1). Ein zweites Thermoelement darunter war mit einer Metallplatte abgedeckt und hat die Temperatur des Innenraums gemessen, ohne direkt der Strahlung durch den Mehrschichtkörper ausgesetzt zu sein (T2).

Der jeweilige Mehrschichtkörper wurde auf das Metallbehältnis aufgesetzt und an den Rändern verschraubt, um einen direkten Kontakt mit der äußeren Umgebung und damit Konvektionseinflüsse aus der Umgebung zu verhindern. Die Oberflächentemperatur auf der Oberseite des Mehrschichtkörpers wurde ebenfalls gemessen (T3). Ferner wurde die Umgebungstemperatur gemessen (T4).

Oberhalb des Mehrschichtköpers war eine Quarz-Halogenlampe mittig über dem Wärmesimulator mit einer Leistung von 400 W in einem Abstand von 430 mm von der Oberfläche des Mehrschichtkörpers angeordnet. Um die Konstanz der Bestrahlung zu prüfen, wurde am Anfang und am Ende der Prüfung die Bestrahlungsstärke im Wellenlängenbereich 400 bis 800 nm gemessen (Sensor: Gigahertz RW-3703-4). Die Bestrahlungsstärke betrug zwischen 10 und 12 mW/cm².

### Messverfahren:

Die Temperaturen der Messstellen T1, T2, T3 wurden kontinuierlich gemessen. Nach ca. 2h Messdauer waren keine Änderungen in den Temperaturverläufen mehr messbar. Als Messwert wurden die Temperaturen nach 4h aufgezeichnet. Die Oberflächentemperatur des Mehrschichtkörpers wurde jeweils am Ende der Messzeit mittels eines IR-Thermometers gemessen.

### Beispiel 1 - Vergleichsbeispiel

Die Wärmesimulatorbox wurde mit einer 4 mm dicken spritzgegossenen Polycarbonatplatte aus Substrat 1 abgedeckt. Der Temperaturanstieg im Innenraum (T1 und T2) sowie die Oberflächentemperatur wurden aufgezeichnet.

### Beispiel 2 - Vergleichsbeispiel

Die Wärmesimulatorbox wurde mit einer 4 mm dicken spritzgegossenen Polycarbonatplatte aus Substrat 2 abgedeckt. Der Temperaturanstieg im Innenraum (T1 und T2) sowie die Oberflächentemperatur wurden aufgezeichnet.

### Beispiel 3 - Vergleichsbeispiel

Die Wärmesimulatorbox wurde mit einem Mehrschichtkörper aus einer 4 mm dicken Schicht aus Substrat 1 und einer auf deren Unterseite aufgebrachten Metallschicht M1 sowie einer auf die Metallschicht aufgebrachten Schutzschicht aus PHC 587 C (Momentive Performance Materials Inc.) in Form einer Lackschicht als Schutzschicht e mit einer Dicke von 2 bis 3 µm abgedeckt. Die Lackschicht wurde per Hand im Flutverfahren aufgebracht. Die Beschichtung wurde 30 Minuten bei 23°C und 33% rel. Feuchte abgelüftet und anschließend 30 Minuten bei 125°C eingebrannt. Metallschicht M1 und Lack lagen auf der der Strahlungsquelle abgewandten Seite der Substratschicht.

### Beispiel 4 - Vergleichsbeispiel

Die Wärmesimulatorbox wurde mit einem Mehrschichtkörper mit einer Schichtenabfolge aus Substrat 1 in einer Dicke von 4 mm, einer auf der Unterseite der Substratschicht aufgebrachten Metallschicht M1 sowie einer auf der Metallschicht aufgebrachten Polycarbonatschicht aus Substrat 3, ebenfalls mit 4 mm Dicke, abgedeckt. Die Schicht aus Substrat 1 war zur Strahlungsquelle hin gerichtet.

### Beispiel 5 - Vergleichsbeispiel

Die Wärmesimulatorbox wurde mit einem Mehrschichtkörper mit einer Schichtenabfolge aus Substrat 1 in einer Dicke von 4 mm, einer auf der Unterseite der Substratschicht angeordneten Metallschicht M1, einer darunter liegenden Schutzschicht aus HMDSO mit einer Dicke von 30 nm sowie einer Polycarbonatschicht aus Substrat 3, ebenfalls in 4 mm Dicke, abgedeckt. Die Schicht aus Substrat 1 war zur Strahlungsquelle hin gerichtet.

### Beispiel 6 - Vergleichsbeispiel

Die Wärmesimulatorbox wurde mit einem Mehrschichtkörper aus Substrat 1 in einer Dicke von 4 mm, und einer unter der Substratschicht aufgebrachten Metall-haltigen Folie M2, wobei der Metallteil der Folie zum Substrat 1 hin orientiert war und der PET-Teil vom Substrat 1 weg gerichtet war, abgedeckt.

### Beispiel 7 - Vergleichsbeispiel

Die Wärmesimulatorbox wurde mit einem Mehrschichtkörper mit der Schichtenabfolge aus Substrat 1 in einer Dicke von 4 mm und auf der Unterseite der Substratschicht angeordneter Metallhaltiger Folie M3 abgedeckt. Die PET-Trägerfolie von M3 lag zum Substrat 1 hin orientiert, während die Metallschicht zum Innenraum der Box zeigte.

### Beispiel 8 -Erfindungsgemäß

Die Wärmesimulatorbox wurde mit einem Mehrschichtkörper aus einer 4 mm dicken Schicht aus spritzgegossenem Substrat 2, einer auf die Unterseite der Substratschicht aufgebrachten Metallschicht M1 sowie auf die Metallschicht zum abzuschirmenden Raumvolumen hin angeordnete Schutzschicht aus Hexamethyldisiloxan (Schutzschicht 1) mit einer Dicke von 30 nm abgedeckt. Metallschicht M1 und Schutzschicht 1 lagen auf der der Strahlungsquelle abgewandten Seite der Substratschicht.

### Beispiel 9 - Erfindungsgemäß

Die Wärmesimulatorbox wurde mit einem Mehrschichtkörper mit einer Schichtenabfolge aus Substrat 1 in einer Dicke von 4 mm, auf der Unterseite der Substratschicht angeordneter Metallschicht M1 und wiederum auf der Metallschicht angeordneter Schutzschicht 1 mit einer Dicke von 30 nm abgedeckt. Die Metallschicht lag auf der Seite von Substrat 1, die von der Strahlungsquelle weg gerichtet war.

### Beispiel 10 - Erfindungsgemäß

Die Wärmesimulatorbox wurde mit einem Mehrschichtkörper mit einer Schichtenabfolge aus Substrat 1 in einer Dicke von 4 mm, auf der Unterseite der Substratschicht angeordneter Metallschicht M1 und wiederum auf der Metallschicht angeordneter Schutzschicht 1 mit einer Dicke von 30 nm abgedeckt. Die Metallschicht lag auf der Seite von Substrat 1, die von der Strahlungsquelle weg gerichtet war. Die Substratschicht 1 wurde auf der unbeschichteten Oberseite mit einer Schutzschicht 2 (Schutzschicht a) versehen.

### Beispiel 11 - Vergleichsbeispiel

Die Wärmesimulatorbox wurde mit einem Mehrschichtkörper mit einer Schichtenabfolge aus Substrat 5 in einer Dicke von 3 mm abgedeckt.

### Beispiel 12 - Vergleichsbeispiel

Die Wärmesimulatorbox wurde mit einem Mehrschichtkörper mit einer Schichtenabfolge aus Substrat 4 in einer Dicke von 3 mm abgedeckt.

### Beispiel 13 - Erfindungsgemäß

Die Wärmesimulatorbox wurde mit einem Mehrschichtkörper mit einer Schichtenabfolge aus Substrat 5 in einer Dicke von 3 mm, einer auf die Unterseite der Substratschicht aufgebrachten Metallschicht M1 sowie auf die Metallschicht zum abzuschirmenden Raumvolumen hin angeordnete Schutzschicht aus Hexamethyldisiloxan (Schutzschicht 1) mit einer Dicke von 30 nm abgedeckt. Metallschicht M1 und Schutzschicht 1 lagen auf der der Strahlungsquelle abgewandten Seite der Substratschicht.

### Beispiel 14 - Erfindungsgemäß

Die Wärmesimulatorbox wurde mit einem Mehrschichtkörper mit einer Schichtenabfolge aus Substrat 4 in einer Dicke von 3 mm, einer auf die Unterseite der Substratschicht aufgebrachten Metallschicht M1 sowie auf die Metallschicht zum abzuschirmenden Raumvolumen hin angeordnete Schutzschicht aus Hexamethyldisiloxan (Schutzschicht 1) mit einer Dicke von 30 nm abgedeckt. Metallschicht M1 und Schutzschicht 1 lagen auf der der Strahlungsquelle abgewandten Seite der Substratschicht.

**Tabelle 2: Ergebnisse**

| | **T1 Innen-Sonne** | **T2 Innen-Schatten** | **T3 Oberfläche** | **T4 Umgebung** |
|---|---|---|---|---|
| 1 (Vergleich) | 68 °C | 54 °C | 60 °C | 22 °C |
| 2 (Vergleich) | 50 °C | 43 °C | 76 °C | 23 °C |
| 3 (Vergleich) | 40 °C | 37 °C | 56 °C | 23 °C |
| 4 (Vergleich) | 40 °C | 36 °C | 54 °C | 22 °C |
| 5 (Vergleich) | 41 °C | 37 °C | 56 °C | 22 °C |
| 6 (Vergleich) | 49°C | 42°C | 59°C | 23°C |
| 7 (Vergleich) | 45°C | 39°C | 60°C | 23°C |
| 8 (erfindungsgemäß) | 37°C | 35°C | 79°C | 23°C |
| 9 (erfindungsgemäß) | 34 °C | 32 °C | 60 °C | 23 °C |
| 10 (erfindungsgemäß) | 32°C | 30°C | 55°C | 20°C |
| 11 (Vergleichsbeispiel) | 66,0°C | 52,2°C | 59,0°C | 20.5°C |
| 12 (Vergleichsbeispiel) | 49,8°C | 43,8°C | 71,0°C | 21,2°C |
| 13 (Erfindungsgemäß) | 30,4°C | 28,7°C | 52,7°C | 20,1°C |
| 14 (Erfindungsgemäß) | 31,3°C | 29,5°C | 56,0°C | 20,7°C |

Der erfindungsgemäße Schichtaufbau für Karosserieteile aus speziellem Polycarbonat und spezieller Metallschicht in bestimmter Anordnung zeigt überraschenderweise geringere Innenraumtemperaturen als die zum Vergleich herangezogenen Mehrschichtkörper - sowohl direkt unterhalb des Mehrschichtkörpers, als auch im "Schatten" werden bei dem erfindungsgemäßen Mehrschichtkörper geringere Temperaturen gemessen.

Die Vergleichsbeispiele 3, 4, 5, 6 und 7 zeigen, dass sich durch Einbringung von Metallschichten die Innenraumtemperaturen effektiv reduzieren lassen, d.h. es konnten im Vergleich zu den Beispielen 1 und 2, welche keine Metallschichten enthalten, niedrigere Innenraumtemperaturen erzielt werden. Überraschenderweise ist aber auch die Anordnung der Metallschicht und die Art der Metallschicht wichtig. Durch bestimmte Anordnung der Metallschicht konnten in den erfindungsgemäßen Beispielen 8 und 9 noch niedrigere Temperaturen im Vergleich zu den Beispielen 3 bis 7 erreicht werden. Das Beispiel 7 mit einer Metallschichtdicke von nur 18 nm zeigt, dass nicht jede Metallschicht geeignet ist, die Innenraumtemperaturen deutlich zu reduzieren. So weisen die erfindungsgemäßen Beispiele 8 und 9 mit erfindungsgemäßer Metallschicht und -Anordnung niedrigere Innenraumtemperaturen auf. Überraschenderweise spielen auch die Transmissionseigenschaften der Substrate eine Rolle. In den besonders bevorzugten Fällen, welcher in den Beispielen 9 und 10 beschrieben werden, werden die niedrigsten Innenraumtemperaturen gemessen. Dabei weist der Schichtaufbau zum "Äußeren" hin keinen störenden metallischen Eindruck auf. Gegenüber einem IR-transparenten Aufbau (Beispiel 9) ist ein nicht IR-transparenter Aufbau (Beispiel 8) leicht nachteilig, da sich die Oberfläche des Mehrschichtkörpers stark aufheizt. Dies stellt einen weiteren Vorteil des besonders bevorzugten Falls dar. Es konnte ferner gezeigt werden, dass sich weitere auf dem Substrat befindliche Schutzschichten (Schutzschicht a; Beispiel 10) nicht negativ auf den Wärmehaushalt des Innenraums auswirken. Dies war überraschend, da derartige Lackschichten oftmals mit antireflektierenden Eigenschaften einhergehenden und damit den Energieeintrag erhöhen sollten. Die erfindungsgemäßen Beispiele 13 und 14 zeigen, dass auch PMMA als Substratmaterial geegnet ist.

## Patentansprüche

1. Karosserieteil, umfassend einen Mehrschichtkörper, umfassend in dieser Reihenfolge
a) optional eine Schutzschicht a,
b) eine Substratschicht b einer Dicke von 1,0 mm bis 7,0 mm auf Basis eines thermoplastischen Polymers, wobei das thermoplastische Polymer ein aromatisches Polycarbonat oder ein PMMA ist, aufweisend
eine Lichttransmission im Bereich von 380 bis 780 nm von weniger als 1,0 %, bestimmt bei einer Schichtdicke von 4 mm nach DIN ISO 13468-2:2006 (D65, 10°), und
eine Energietransmission T_{DS} von weniger als 40%, bestimmt nach ISO 13837:2008 bei einer Schichtdicke von 4 mm,
c) ggf. eine weitere Schicht c auf Basis eines thermoplastischen Polymers mit einer Maximaldicke von 600 µm,
d) eine Metallschicht d, enthaltend mindestens ein Element, ausgewählt aus Ag, Al, Au, Pt, Fe, Cr, Sn, In, Ti, Pd, Nb, Cu, V, Edelstahl oder deren Legierungen, mit einer Dicke von 40 nm bis 500 µm und
e) optional eine Schutzschicht e,
wobei
die Metallschicht d auf der Seite des Mehrschichtkörpers angeordnet ist, die dazu bestimmt ist, zum Fahrzeuginneren hin orientiert zu sein und wobei
die auf die Schicht d folgenden Schichten, einschließlich der Schutzschicht e, in Summe eine Dicke von maximal 50 nm aufweisen.

2. Karosserieteil nach Anspruch 1, wobei das Karosserieteil eine dreidimensional geformte Oberfläche aufweist.

3. Karosserieteil nach Anspruch 1 oder 2, wobei die Schutzschicht a) einen Polysiloxanlack, enthaltend siliciumorganische Verbindungen der Formel RₙSiX₄₋ₙ und/oder partielle Kondensate derselben,
wobei die Reste
R gleich oder verschieden sind und für einen linearen oder verzweigten, gesättigten oder ein- oder mehrfach ungesättigten oder aromatischen Kohlenwasserstoffrest stehen,
die Reste
X gleich oder verschieden sind und für hydrolysierbare Gruppen oder Hydroxylgruppen stehen und
n 0,1,2 oder 3 ist,
und mindestens einen UV-Absorber,
umfasst.

4. Karosserieteil nach einem der vorhergehenden Ansprüche, wobei die Schutzschicht e eine Korrosionsschutzschicht aus Hexamethyldisiloxan ist.

5. Karosserieteil nach einem der vorhergehenden Ansprüche, wobei die Substratschicht b weniger als 0,001 Gew.-% Ruß und keine von Ruß verschiedenen IR-Absorber enthält.

6. Karosserieteil nach einem der vorhergehenden Ansprüche, wobei die Substratschicht b keinen Ruß enthält.

7. Karosserieteil nach Anspruch 5 oder 6, wobei die Substratschicht mindestens zwei Farbmittel aus den Gruppen, bestehend aus Anthrachinonfarbstoffen und Perinonfarbstoffen, enthält.

8. Karosserieteil nach Anspruch 7, wobei die Summe aller Farbmittel mehr als 0,05 Gew.-% beträgt.

9. Karosserieteil nach einem der vorhergehenden Ansprüche, wobei der mittlere IR-Transmissionsgrad der Substratschicht b bei der im Mehrschichtkörper vorliegenden Dicke im Bereich zwischen 780 und 2500 nm mindestens 50 % beträgt, wobei unter dem "mittleren IR-Transmissiongrad" das arithmetische Mittel des nach ISO 13468-2:2006 gemessenen Transmissionsgrades verstanden wird.

10. Karosserieteil nach einem der Ansprüche 1 bis 4, 7 oder 8, wobei die Substratschicht b mindestens 0,04 Gew.-% Ruß enthält.

11. Karosserieteil nach Anspruch 10, wobei die Energietransmission T_{DS} des Mehrschichtkörpers weniger als 1%, bestimmt nach ISO 13837:2008, beträgt.

12. Karosserieteil nach einem der vorhergehenden Ansprüche, wobei der Mehrschichtkörper außer den Schichten a, b, optional c, d und optional e sowie ggf. vorhandenen Klebeschichten zum Verbinden der einzelnen Schichten und/oder Metalloxid- oder Metallnitrid-Schichten keine weiteren Schichten umfasst.

13. Karosserieteil nach einem der vorhergehenden Ansprüche, wobei das Karosserieteil aus dem Mehrschichtkörper besteht.

14. Karosserieteil nach einem der vorhergehenden Ansprüche, wobei das Karosserieteil ein Dach, Dachmodul, Teil eines Dachmoduls, Blende, Verkleidung oder Rahmen jeweils für ein Fahrzeug oder ein Teil eines solchen ist.

## Claims

1. A body panel comprising a multilayer article, comprising, in this sequence,
a) optionally a protective layer a,
b) a substrate layer b of thickness 1.0 mm to 7.0 mm, based on a thermoplastic polymer, where the thermoplastic polymer is an aromatic polycarbonate or a PMMA, having
light transmittance in the range from 380 to 780 nm of less than 1.0% determined at a layer thickness of 4 mm according to DIN ISO 13468-2:2006 (D65, 10°) and
energy transmittance T_{DS} of less than 40%, determined according to ISO 13837:2008 at a layer thickness of 4 mm,
c) optionally a further layer c based on a thermoplastic polymer having a maximum thickness of 600 µm,
d) a metal layer d comprising at least one element selected from Ag, Al, Au, Pt, Fe, Cr, Sn, In, Ti, Pd, Nb, Cu, V, stainless steel or alloys thereof, having a thickness of 40 nm to 500 µm, and
e) optionally a protective layer e,
wherein
the metal layer d is disposed on the side of the multilayer article destined to be oriented toward the interior of the vehicle, and wherein
the layers that follow on from layer d, including protective layer e, have a total thickness of not more than 50 nm.

2. Body panel according to Claim 1, wherein the body panel has a three-dimensionally shaped surface.

3. Body panel according to Claim 1 or 2, wherein the protective layer a) comprises a polysiloxane lacquer comprising
organosilicon compounds having the formula RₙSiX₄₋ₙ and/or partial condensates thereof,
where the radicals
R are the same or different and are a linear or branched, saturated or mono- or polyunsaturated or aromatic hydrocarbyl radical,
the radicals
X are the same or different and are hydrolyzable groups or hydroxyl groups and
n is 0, 1, 2 or 3,
and at least one UV absorber.

4. Body panel according to any of the preceding claims, wherein the protective layer e is an anticorrosion layer of hexamethyldisiloxane.

5. Body panel according to any of the preceding claims, wherein the substrate layer b contains less than 0.001% by weight of carbon black and no IR absorbers other than carbon black.

6. Body panel according to any of the preceding claims, wherein the substrate layer b does not contain any carbon black.

7. Body panel according to Claim 5 or 6, wherein the substrate layer comprises at least two colourants from the groups consisting of anthraquinone dyes and perinone dyes.

8. Body panel according to Claim 7, wherein the sum total of all colourants is more than 0.05% by weight.

9. Body panel according to any of the preceding claims, wherein the average IR transmittance of the substrate layer b at the thickness that exists in the multilayer article in the range between 780 and 2500 nm is at least 50%, where the "average IR transmittance" is understood to mean the arithmetic average of the transmittance measured according to ISO 13468-2:2006.

10. Body panel according to any of Claims 1 to 4, 7 and 8, wherein the substrate layer b contains at least 0.04% by weight of carbon black.

11. Body panel according to Claim 10, wherein the energy transmittance T_{DS} of the multilayer article is less than 1%, determined according to ISO 13837:2008.

12. Body panel according to any of the preceding claims, wherein the multilayer article, apart from layers a, b, optionally c, d and optionally e and any adhesive layers present for bonding of the individual layers and/or metal oxide or metal nitride layers, does not comprise any further layers.

13. Body panel according to any of the preceding claims, wherein the body panel consists of the multilayer article.

14. Body panel according to any of the preceding claims, wherein the body panel is a roof, roof module, part of a roof module, bezel, lining or frame, in each case for a vehicle or part thereof.

## Revendications

1. Pièce de carrosserie, comprenant un corps stratifié, comprenant dans cet ordre
a) éventuellement une couche de protection a,
b) une couche de substrat b d'une épaisseur de 1,0 mm à 7,0 mm à base d'un polymère thermoplastique, le polymère thermoplastique étant un polycarbonate aromatique ou un PMMA, présentant
une transmission de lumière dans la plage de 380 à 780 nm inférieure à 1,0 %, déterminée à une épaisseur de couche de 4 mm selon la norme DIN ISO 13468-2:2006 (D65, 10°), et
une transmission d'énergie T_{DS} inférieure à 40 %, déterminée selon la norme ISO 13837:2008 à une épaisseur de couche de 4 mm,
c) éventuellement une couche supplémentaire c à base d'un polymère thermoplastique dotée d'une épaisseur maximale de 600 µm,
d) une couche métallique d, contenant au moins un élément, choisi parmi Ag, Al, Au, Pt, Fe, Cr, Sn, In, Ti, Pd, Nb, Cu, V, acier inoxydable ou ses alliages, dotée d'une épaisseur de 40 nm à 500 µm et
e) éventuellement une couche de protection e,
la couche métallique d étant agencée sur le côté du corps stratifié qui est destiné à être orienté vers l'intérieur du véhicule et
les couches suivant la couche d, y compris la couche de protection e, présentant au total une épaisseur de maximum 50 nm.

2. Pièce de carrosserie selon la revendication 1, la pièce de carrosserie présentant une surface formée de manière tridimensionnelle.

3. Pièce de carrosserie selon la revendication 1 ou 2, la couche de protection a) comprenant une laque de polysiloxane, contenant des composés d'organosilicium de formule RₙSiX₄₋ₙ et/ou des condensats partiels de ceux-ci,
les radicaux R étant identiques ou différents et représentant un radical hydrocarboné linéaire ou ramifié, saturé ou monoinsaturé ou polyinsaturé ou aromatique,
les radicaux X étant identiques ou différents et représentant des groupes hydrolysables ou des groupes hydroxyle et
n étant 0, 1, 2 ou 3,
et au moins un absorbant UV.

4. Pièce de carrosserie selon l'une quelconque des revendications précédentes, la couche de protection e étant une couche anticorrosion composée d'hexaméthyldisiloxane.

5. Pièce de carrosserie selon l'une quelconque des revendications précédentes, la couche de substrat b contenant moins de 0,001 % en poids de suie et aucun absorbant IR différent de la suie.

6. Pièce de carrosserie selon l'une quelconque des revendications précédentes, la couche de substrat b ne contenant pas de suie.

7. Pièce de carrosserie selon la revendication 5 ou 6, la couche de substrat contenant au moins deux agents de coloration choisis dans les groupes constitués par les colorants de type anthraquinone et les colorants de type périnone.

8. Pièce de carrosserie selon la revendication 7, la somme de tous les agents de coloration étant supérieure à 0,05 % en poids.

9. Pièce de carrosserie selon l'une quelconque des revendications précédentes, le degré moyen de transmission IR de la couche de substrat b à l'épaisseur présente dans le corps stratifié dans la plage comprise entre 780 et 2 500 nm étant d'au moins 50 %, où, par « degré moyen de transmission IR », on entend la moyenne arithmétique du degré de transmission mesuré selon la norme ISO 13468-2:2006.

10. Pièce de carrosserie selon l'une quelconque des revendications 1 à 4, 7 ou 8, la couche de substrat b contenant au moins 0,04 % en poids de suie.

11. Pièce de carrosserie selon la revendication 10, la transmission d'énergie T_{DS} du corps stratifié étant inférieure à 1 %, déterminée selon la norme ISO 13837:2008.

12. Pièce de carrosserie selon l'une quelconque des revendications précédentes, le corps stratifié, outre les couches a, b, éventuellement c, d et éventuellement e ainsi qu'éventuellement des couches d'adhésif présentes pour relier les couches individuelles et/ou des couches d'oxyde métallique ou de nitrure métallique, ne comprenant aucune couche supplémentaire.

13. Pièce de carrosserie selon l'une quelconque des revendications précédentes, la pièce de carrosserie étant constituée du corps stratifié.

14. Pièce de carrosserie selon l'une quelconque des revendications précédentes, la pièce de carrosserie étant un toit, un module de toit, une partie d'un module de toit, un cache, un parement ou un cadre à chaque fois pour un véhicule ou une partie de celui-ci.
